# EUROPEAN PATENT SPECIFICATION

(11) **EP 2 478 218 B1**
(45) Date of publication and mention of the grant of the patent: **24.10.2018**
(21) Application number: 10785303.8
(22) Date of filing: 30.11.2010
(51) Int. Cl.: F03D 9/17

(54) **WIND TURBINE GENERATOR SYSTEM AND OPERATION CONTROL METHOD THEREOF**
WINDKRAFTGENERATOR UND BETRIEBSSTEUERVERFAHREN
SYSTÈME DE GÉNÉRATEUR ÉOLIEN ET PROCÉDÉ DE COMMANDE DE FONCTIONNEMENT CORRESPONDANT

(43) Date of publication of application: 25.07.2012
(73) Proprietor: Mitsubishi Heavy Industries, Ltd., Tokyo 108-8215 (JP)
(72) Inventor: TSUTSUMI, Kazuhisa, Tokyo 1088215 (JP); SHIMIZU, Masayuki, Tokyo 1088215 (JP); CALDWELL, Niall, Lothian EH209TB (GB); DUMNOV, Daniil, Lothian EH209TB (GB); RAMPEN, William, Lothian EH209TB (GB); PAPPALA, Venkata, London W1K6WL (GB)
(74) Representative: Hindles Limited
(86) International application number: PCT/JP2010/006979
(87) International publication number: WO 2012/073279

(56) References cited:
- EP-A1- 0 020 207
- WO-A1-2007/053036
- US-A- 4 206 608
- US-A1- 2003 168 862
- US-A1- 2007 024 058
- US-A1- 2009 273 186
- US-A1- 2010 032 959

## Description

### Technical Field

The present invention relates to a wind turbine generator which transmits rotation of a rotor to a generator via a hydraulic transmission including a hydraulic pump and a hydraulic motor, and an operation control method thereof.

### Background Art

In recent years, from a perspective of preserving the environment, it is becoming popular to use a wind turbine generator utilizing wind power which is one form of renewable energy.

The wind turbine generator converts motion energy of the wind to the rotation energy of the rotor and further converts the rotation energy of the rotor to electric power by the generator. In a common wind turbine generator, the rotation speed of the rotor is about a few rotations per minute to tens of rotations per minute. Meanwhile, a rated speed of the generator is normally 1500rpm or 1800rpm and thus a mechanical gearbox is provided between the rotor and the generator. Specifically, the rotation speed of the rotor is increased to the rated speed of the generator by the gearbox and then inputted to the generator.

In recent years, the gearbox tends to become heavier and more expensive as the wind turbine generators are getting larger to improve power generation efficiency. Thus, a wind turbine generator equipped with a hydraulic transmission adopting a combination of a hydraulic pump and a hydraulic motor of a variable capacity type is getting much attention.

For instance, Patent Document 1 discloses a wind turbine generator using a hydraulic transmission including a hydraulic pump rotated by a rotor and a hydraulic motor connected to a generator. In the hydraulic transmission of this wind turbine generator, the hydraulic pump and the hydraulic motor are connected via a high pressure reservoir and a low pressure reservoir. By this, the rotation energy of the rotor is transmitted to the generator via the hydraulic transmission. Further, the hydraulic pump is constituted of a plurality of sets of pistons and cylinders, and cams which periodically reciprocate the pistons in the cylinders.

Further, Patent Document 2 describes a wind turbine generator adopting a hydraulic transmission constituted of a hydraulic pump rotated by a rotor, a hydraulic motor connected to a generator, and an operating oil path arranged between the hydraulic pump and the hydraulic motor. In the hydraulic transmission of this wind turbine generator, the hydraulic pump is constituted of a plurality of sets of pistons and cylinders, cams which periodically reciprocate the pistons in the cylinders, and high pressure valves and low pressure valves which opens and closes with the reciprocation of the pistons. By latching the piston near a top dead center, a working chamber surrounded by the cylinder and the piston is disabled, and then the displacement of the hydraulic pump is changed.

Although the hydraulic pump and the hydraulic motor are not variable displacement type, Patent Document 3 discloses a wind turbine generator having a hydraulic pump and a hydraulic motor. The wind turbine generator of Patent Document 3 maintains the rotation speed of the generator constant by adjusting the pressure of operating oil to be supplied from a hydraulic pump to a hydraulic motor. In this wind turbine generator, a discharge side of the hydraulic pump is connected to an intake side of the hydraulic motor via an inner space of the tower functioning as a high pressure tank, and an intake side of the hydraulic pump is connected to a discharge side of the hydraulic motor vi a low pressure tank arranged below the tower. Further, a proportional valve is provided between the high pressure tank and the hydraulic motor. The pressure of the operating oil to be supplied to the hydraulic motor is adjusted by the proportional valve.

### Citation List

### Patent Literature

PTL 1: US 2010/0032959
PTL 2: US 2010/0040470
PTL 3: US 7436086

A similar wind turbine generator system is also disclosed in US 2007/0024058.

### Summary of Invention

### Technical Problem

In the conventional wind turbine generator, it is necessary to appropriately perform efficient and stable operation thereof in response to the change of the wind conditions such as the low wind speed or the occurrence of a gust. Further, to synchronize the wind turbine generator with the grid, the wind turbine generator must be equipped with a Ride Through function at Grid low voltage condition according to a grid code set by every country. The Ride Through function at Grid low voltage condition enables an uninterrupted operation without being disconnected from the grid even when the voltage of the grid declined momentarily.

However, none of the wind turbine generators disclosed in Patent Documents 1 to 3 takes measures against the situation when the wind speed is low and when there arises a gust. Therefore, the wind turbine generators of Patent Documents 1 to 3 do not necessary achieve an operation efficiency or stability when the wind speed is low and when there arises a gust.
Further, none of Patent Documents 1 to 3 discloses a structure to realize the Ride Through function at Grid low voltage condition and there was an issue on how to realize the Ride Through function at Grid low voltage condition in the wind turbine generator using a hydraulic transmission.

In view of the problems above, an object of the present invention is to provide a wind turbine generator system and an operation control method thereof, which has a superior operation efficiency and stability at a low wind speed and during the occurrence of a gust and is equipped with Ride Through function at Grid low voltage condition.

### Solution to Problem

A wind turbine generator system in relation to the present invention, comprises the features of claim 1.

In this wind turbine generator system, the opening and closing of the accumulator valve is controlled based on at least of wind speed and the state of the grid. When the accumulator valve is opened, the accumulator is in communication with the high pressure oil line, and the pressure in the high pressure oil line is absorbed in the accumulator or the pressure in accumulator is released to the high pressure oil line depending on which one of the pressure in the accumulator and the pressure in the high pressure oil line is higher. Meanwhile, when the accumulator valve is closed, the communication between the accumulator and the high pressure oil line is disconnected and thus the pressure in the accumulator is maintained on its own without depending on the pressure in the high pressure oil line.

Therefore, the opening and closing of the accumulator valve is controlled base on at least one of the wind speed and the state of the grid, so as to improve the operation efficiency and stability when the wind speed is low and when there arises a gust, and to realize the Ride Through function at Grid low voltage condition.

The wind turbine generator system preferably further comprises a grid state determination unit, wherein the state of the grid is determined by the grid state determination unit.

The wind turbine generator system may further comprise a bypass oil line which is arranged between the high pressure oil line and the low pressure oil line to bypass the hydraulic motor; and a relief valve which is arranged in the bypass oil line to maintain the hydraulic pressure in the high pressure oil line not more than a set pressure.

In this manner, by providing the relief valve in the bypass line, the pressure in the high pressure oil line rises to the prescribed pressure of the relief valve by the high pressure oil supplied from the hydraulic pump raises the pressure, and then the relief valve automatically opens to discharge excessive high pressure oil to the low pressure oil line via the bypass line.

In the wind turbine generator system, when the wind speed is below a cut-in wind speed, the control unit may control a displacement of the hydraulic motor approximately to zero, and keep the accumulator valve open so as to store in the accumulator a pressure of operating oil discharged from the hydraulic pump which pressure can be reached to a set value of a relief valve.

Alternatively, in the wind turbine generator system, when the wind speed is below a cut-in wind speed, the control unit controls a displacement of the hydraulic motor approximately to zero, and opens the accumulator valve so as to store in the accumulator a pressure of operating oil discharged from the hydraulic pump and closes the accumulator valve when the pressure in the accumulator detected by the first pressure sensor reaches a threshold value which is decided in advance.

In the conventional wind turbine generator system, there is not power generation when the wind speed is below the cut-in wind speed and thus, the wind energy at the low wind speed is wasted. Thus, the accumulator valve is opened when the wind speed is below the cut-in wind speed so as to store pressure in the accumulator. As a result, the wind energy previously wasted at the low wind speed is utilized, resulting in improved operation efficiency.

The wind turbine generator system may further comprise a first pressure sensor which detects a pressure in the accumulator and a second pressure sensor which detects a pressure in the high pressure oil line, and the control unit may preferably control a displacement of the hydraulic motor approximately to zero leaving some displacement, opens the accumulator valve so as to store in the accumulator a pressure of operating oil discharged from the hydraulic pump in such a case that the pressure in the accumulator detected by the first pressure sensor is lower than the pressure in the high pressure oil line detected by the second pressure sensor, and closes the accumulator valve when the pressure in the accumulator detected by the first pressure sensor reaches a threshold value.

In such a case, the wind turbine generator system may further comprises: a first pressure sensor which detects the pressure in the accumulator; a bypass oil line which is arranged between the high pressure oil line and the low pressure oil line to bypass the hydraulic motor; and a relief valve which is arranged in the bypass oil line to maintain the hydraulic pressure in the high pressure oil line not more than a set pressure, wherein, when the pressure in the accumulator detected by the first pressure sensor reaches the set pressure of the relief valve, the control unit closes the accumulator valve.

In this manner, by providing the relief valve in the bypass line, the pressure in the high pressure oil line rises to the prescribed pressure of the relief valve by the high pressure oil supplied from the hydraulic pump raises the pressure, and then the relief valve automatically opens to discharge excessive high pressure oil to the low pressure oil line via the bypass line. Further, when the pressure in the accumulator reaches the prescribed pressure of the relief valve, the wind energy at the low wind speed can be stored maximally as a pressure in the accumulator.

Further, when the wind speed is not less than the cut-in wind speed, the control unit keeps the accumulator valve open so as to assist rotation of the hydraulic motor with use of pressure of operating oil in the accumulator.

Alternatively, when the wind speed is not less than the cut-in wind speed, the control unit opens the accumulator valve so as to assist rotation of the hydraulic motor with use of pressure of operating oil in the accumulator in such a case that the pressure in the accumulator detected by the first pressure sensor is higher than the pressure in the high pressure oil line detected by the second pressure sensor.

By this, with use of the pressure of the fluid in the accumulator stored at the low wind speed, more electric power can be generated, resulting in improving the operation efficiency.

The above wind turbine generator system may further comprises: a pitch driving mechanism which adjusts a pitch angle of a blade mounted on the hub, wherein, when the grid state determination unit determines that a voltage of the grid has decreased to a prescribed voltage or lower and the condition based on Gid Code rule continues, the control unit may controls the pitch driving mechanism to change the pitch angle of the blade toward a feathering position, changes the displacements of the hydraulic pump to meet the load of the rotor and reduces the hydraulic motor to an amount required for keeping the generator synchronized with the grid, and keeps the accumulator valve open so as to store in the accumulator a pressure of the operating oil discharged from the hydraulic pump.

Alternatively, the wind turbine generator system may further a pitch driving mechanism which adjusts a pitch angle of a blade mounted on the hub, wherein, when the grid state determination unit determines that a voltage of the grid has decreased to a prescribed voltage or lower and the condition based on Gid Code rule continues, the control unit controls the pitch driving mechanism to change the pitch angle of the blade to a feathering position, changes the displacements of the hydraulic pump to meet the load of the rotor and reduces the hydraulic motor to an amount required for keeping the generator synchronized with the grid, and opens the accumulator valve so as to store in the accumulator a pressure of the fluid discharged from the hydraulic pump in such a case that the pressure in the accumulator detected by the first pressure sensor is lower than the pressure in the high pressure oil line detected by the second pressure sensor.

As described above, when the voltage of the grid is decreased, the pitch angle is changed to the feathering position and, the displacements of the hydraulic pump are changed to meet the load of the rotor and the hydraulic motor is reduced to an amount required for keeping the generator synchronized with the grid, so as to continue the operation of the system without being disconnected from the grid. That is, the Ride Through function at Grid low voltage condition is realized.

Herein, after the voltage of the grid has decreased to the prescribed voltage or lower, if the displacement of the hydraulic pump is suddenly reduced, the adjusting of the pitch angle does not catch up with the reduced displacement and thus the force acting from the wind acting on the rotor with respect to the torque required for driving the hydraulic pump becomes too strong and the rotation of the rotor increases dramatically. Meanwhile, after the voltage of the grid has declined, the load of the generator declines dramatically and thus, the rotation of the hydraulic motor gets too fast unless the displacement of the hydraulic motor is reduced instantly. Therefore, after the voltage of the grid has decreased, the displacement of the hydraulic motor needs to be reduced promptly in comparison to the hydraulic pump. Unless the displacement of the hydraulic motor is reduced promptly, the discharge amount from the hydraulic pump momentarily exceeds the discharge amount from the hydraulic motor and thus the pressure in the high pressure oil line rises, which can result in dysfunction of the hydraulic transmission. By providing a relief valve for releasing the excessive pressure from the high pressure oil line to the low pressure oil line, the pressure in the high pressure oil line does not exceed the prescribed pressure. However, the friction heat cause when passing through the relief valve rises the temperature of the fluid, and it is difficult to promptly return to the normal operation once the voltage of the grid is restored.

Therefore, when the voltage of the grid has decreased to the prescribed voltage or below, the accumulator valve is opened in such a case that the pressure in the accumulator is lower than the pressure in the high pressure oil line, thereby preventing the pressure in the high pressure oil line from being too high or the temperature of the fluid from rising by the actuation of the relief valve.

Furthermore, the wind turbine generator system may further comprise an uninterruptible power supply which supplies electrical power to the pitch driving mechanism when the voltage of the grid becomes zero.

Further, the wind turbine generator system may further comprise an uninterruptible power supply which supplies electrical power to the hydraulic pump and the hydraulic motor when the voltage of the grid becomes zero.

By this, even when the voltage of the grid becomes zero, the pitch driving mechanism and/or the hydraulic pump and the hydraulic motor can be operated to put the wind turbine generator system into a Ride Through operation state at Grid low voltage condition or a shutoff state.

It is preferable that, when the grid state determination unit determines that voltage of the grid starts to be restored, the control unit changes the pitch angle of the blade to a fine position, and sets the displacements of the hydraulic pump so that a power coefficient becomes at a maximum thereof, and increases the displacement of the hydraulic motor so that the power generated by the generator into the grid increases.

In this manner, when the voltage of the grid starts to be is restored, the pitch angle is changed to the fine position and the displacements of the hydraulic pump is set so that a power coefficient becomes at a maximum thereof, and the displacement of the hydraulic motor is increased so that the power generated by the generator into the grid increases. As a result, the operation of the system can promptly returns to the efficient operation.

Moreover, in this situation, the accumulator valve may be opened so as to assist rotation of the hydraulic motor with use of pressure of fluid in the accumulator in such a case that the pressure in the accumulator is higher than the pressure in the high pressure oil line.

The wind turbine generator system may also comprise: a oil tank which stores fluid and is connected to the low pressure oil line; an accumulator pressure relief line provided between the accumulator valve and the accumulator and connected to one of the low pressure oil line and the oil tank; and a pressure relief valve provided in the accumulator pressure relief line, wherein, when the grid state determination unit determines that voltage of the grid is restored, the control unit opens the pressure relief valve to allow the pressure in the accumulator to escape to the one of the low pressure oil line and the oil tank.

As described above, when the voltage of the grid is restored, the pressure relief valve is opened to allow the pressure in the accumulator to escape to the low pressure oil line or the oil tank. As a result, the pressure in the accumulator can be reduced to take measure against the reoccurrence of the voltage decline of the grid.

In the above wind turbine generator system, when there arises a gust having a wind speed greater than a prescribed threshold value, the control unit may keep the accumulator valve open so as to store in the accumulator a pressure of operating oil discharged from the hydraulic pump, and when the wind speed of the gust becomes not greater than the prescribed threshold value, the control unit keeps the accumulator valve open so as to assist rotation of the hydraulic motor with use of the pressure of the operating oil in the accumulator.
Alternatively, a first pressure sensor which detects a pressure in the accumulator and a second pressure sensor which detects a pressure in the high pressure oil line may also be provided and when there arises a gust having a wind speed greater than a prescribed threshold value, the control unit opens the accumulator valve so as to store in the accumulator a pressure of fluid discharged from the hydraulic pump in such a case that the pressure in the accumulator detected by the first pressure sensor is lower than the pressure in the high pressure oil line detected by the second pressure sensor; and when the wind speed of the gust becomes not greater than the prescribed threshold value, the control unit keeps the accumulator valve open until the pressure in the accumulator detected by the first pressure sensor becomes the same as the pressure in the high pressure oil line detected by the second pressure sensor.

When there arises a gust, the rotation of the rotor rises and the discharge amount from the hydraulic pump increases, thereby rising the pressure in the high pressure oil line. Therefore, when there arises a gust, the accumulator valve is opened in such a case that pressure in the accumulator is lower than the pressure in the high pressure oil line so as to absorb the excessive pressure of the high pressure oil line in the accumulator. And once the wind speed of the gust becomes equal to or lower than the threshold value, the accumulator valve is kept open so as to release the pr4essure in the accumulator. In this manner, the effect of the gust on the wind turbine generator system can be minimized.

Further, the prescribed threshold value may be 60m/sec which is obtained as an average wind speed for a period of three seconds or longer.

Further, the wind turbine generator system further comprises: an oil tank which stores operating oil and is connected to the low pressure oil line; an accumulator pressure relief line provided between the accumulator valve and the accumulator and connected to one of the low pressure oil line and the oil tank; and a pressure relief valve provided in the accumulator pressure relief line, wherein, when the grid state determination unit determines that voltage of the grid is restored, the control unit opens the pressure relief valve to allow the pressure in the accumulator to escape to the one of the low pressure oil line and the oil tank.

As described above, when the wind speed of the gust becomes not greater than the threshold value, the pressure relief valve is opened so as to allow the pressure in the accumulator to escape to the low pressure oil line or the oil tank via the accumulator pressure relief line. As a result, the pressure in the accumulator is reduced and thus, it is possible to take measure against the recurrence of the gust.

The wind turbine generator system may further comprise: a oil tank which stores fluid; and a boost pump which replenishes the low pressure oil line with the fluid from the oil tank.

By this, even if the fluid leaks in the hydraulic transmission, the boost pump replenishes the low pressure oil line with the fluid from the oil tank so as to keep the amount of the fluid circulating in the hydraulic transmission.

In this situation, the wind turbine generator system may also comprise: a return line which returns the fluid in the low pressure oil line to the oil tank; and a low pressure relief valve which is arranged in the return line to maintain the hydraulic pressure in the low pressure oil line approximately at a set pressure.

By this, although the boost pump replenishes the low pressure oil line with the fluid, the low pressure relief valve automatically opens once the pressure in the low pressure oil line reaches the prescribed pressure of the low pressure relief valve. Thus, the fluid is returned to the oil tank via the return line and the amount of the fluid circulating in the hydraulic transmission is appropriately maintained.

The present invention also proposes an operation control method of a wind turbine generator system which comprises the features of claim 19.

According to the operation control method of the wind turbine generator system, the opening and closing of the accumulator valve is controlled based on at least one of wind speed and the state of the grid determined by the grid state determination. As a result, the operation efficiency and stability at the low wind speed or when there arises a gust, can be improved and the Ride Through function at Grid low voltage condition can be achieved as well.

### Advantageous Effects of Invention

According to the present invention, the accumulator is connected to the high pressure oil line via the accumulator valve and the opening and closing of the accumulator valve is controlled based on at least one of wind speed and the state of the grid determined by the grid state determination unit and both of the pressure in the accumulator detected by the first pressure sensor and the pressure in the high pressure oil line detected by the second pressure sensor. As a result, the operation efficiency and stability at the low wind speed or when there arises a gust, can be improved and the Ride Through function at Grid low voltage condition can be achieved as well.

### Brief Description of Drawings

[fig. 1]Fig. 1 is a general structure of a wind turbine generator system.
[fig.2]Fig. 2 is a diagram showing a structure of a pitch driving mechanism.
[fig.3]Fig. 3 is a diagram showing a structure of a hydraulic transmission.
[fig.4]Fig. 4 is a diagram showing a system structure of the wind turbine generator system.
[fig.5]Fig. 5 is a flow chart showing an operation control of an accumulator at a low wind speed.
[fig.6]Fig. 6 is a flow chart showing an operation control of releasing pressure in the accumulator.
[fig.7]Fig. 7 is a flow chart showing an operation control when a voltage of a grid has decreased.
[fig.8]Fig. 8 is a flow chart showing an operation control when there arises a gust.

### Description of Embodiments

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

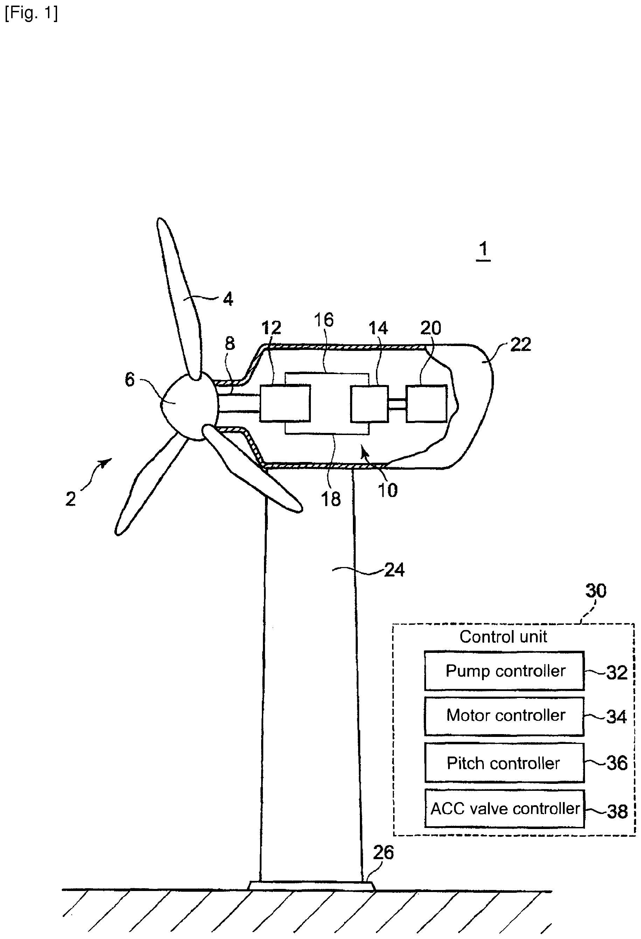

A general structure of the wind turbine generator system in relation to a preferred embodiment is described. Fig. 1 illustrates a general structure of a wind turbine generator system.

As an example of the wind turbine generator, a three-bladed wind turbine is used. However, the preferred embodiment is not limited to this example and can be applied to various types of wind turbine generator systems.

As illustrated in Fig. 1, a wind turbine generator system 1 comprises a rotor 2 rotated by the wind, a hydraulic transmission 10 for increasing rotation speed of the rotor 2, a generator 20 for generating electric power, a nacelle 22, a tower 24 system for supporting the nacelle 22 and a control unit 30 for controlling each controller of the wind turbine generator system 1.

The rotor 2 is constructed such that a main shaft 8 is connected to a hub 6 having blades 4. Specifically, three blades 4 extend radially from the hub 6 and each of the blades 4 is mounted on the hub 6 connected to the main shaft 8. By this, the power of the wind acting on the blades 4 rotates the entire rotor 2, the rotation of the rotor 2 is inputted to the hydraulic transmission 10 via the main shaft 8.

The hydraulic transmission 10 includes a hydraulic pump 12 of a variable displacement type which is rotated by the main shaft 8, a hydraulic motor 14 of a variable displacement type which is connected to the generator 20, and a high pressure oil line 16 and a low pressure oil line 18 which are arranged between the hydraulic pump 12 and the hydraulic motor 14. The detailed structure of the hydraulic transmission 10 is described later.

The generator 20 is connected to the hydraulic motor 14 of the hydraulic transmission 10. An existing asynchronous generator or synchronous generator can be used as the generator 20. The torque having the rotation speed that is almost constant is inputted from the hydraulic motor 14 to the generator 20 and then the generator 20 generates alternating current having a frequency that is almost constant. Further, the generator 20 is synchronized with a grid 50 which will be described later, and the current generated by the generator 20 is transmitted to the grid 50.

The nacelle 22 supports the hub of the rotor 2 rotatably and houses a variety of devices such as the hydraulic transmission 10 and the generator 20. The nacelle 22 is further supported on the tower 24 rotatably and may be turned in accordance with the wind direction by a yaw motor which is not shown.

The tower 24 is formed into a column shape extending upward from a base 26. For instance, the tower 22 can be constituted of one column member or a plurality of units that are connected in a vertical direction to form a column shape. If the tower 24 is constituted of the plurality of units, the nacelle 22 is mounted on the top-most unit.

The control unit 30 comprises a pump controller 32 for adjusting the displacement of the hydraulic pump 12, a motor controller for adjusting the displacement of the hydraulic motor 14, a pitch controller for adjusting the pitch angle of the blade 4, and an ACC valve controller 38 for controlling the opening and closing of an accumulator valve described later.

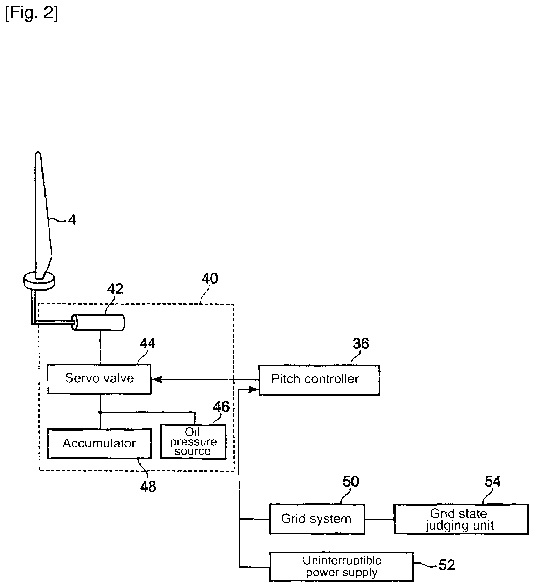

Further, a pitch driving mechanism 40 for changing the pitch angle of the blade 4 is housed in the hub 6. Fig. 2 is a diagram showing a structure of the pitch driving mechanism 40. The figure illustrates the pitch driving mechanism 40 comprising a hydraulic cylinder 42, a servo valve 44, a hydraulic pressure source 46 and an accumulator 48. The servo valve 44 adjusts the supply of the high pressure oil generated by the hydraulic pressure source 46 and the high pressure oil stored in the accumulator 48 to the hydraulic cylinder 42 so as to achieve a desired pitch angle of the blade 4 under the control of the pitch controller 36.

The pitch controller 36 normally receives the electric power from the grid 50. However, when the voltage of the grid becomes zero, the electric power is supplied from an uninterruptible power supply 52. Further, a state of the grid 50 is monitored by a grid state determination unit 54. The grid state determination unit 42 preferably includes a voltage sensor for measuring a voltage of the grid 50. However, the voltage sensor can be replaced with a power-factor meter or a reactive volt-ampere meter to indirectly determine the state of the grid 50.

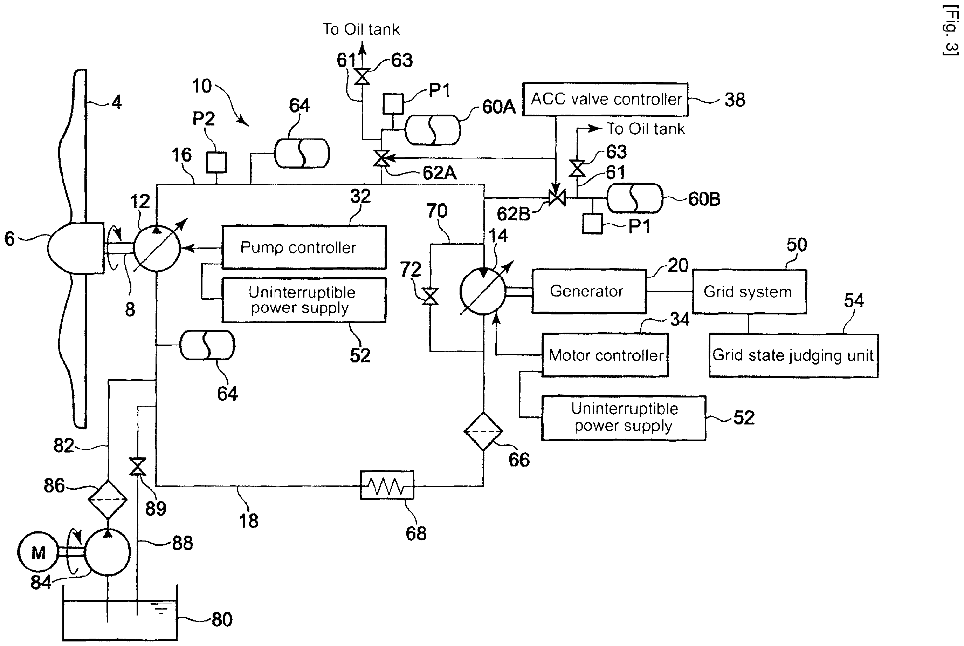

Next, a detailed structure of the hydraulic transmission 10 is explained. Fig. 3 is a diagram showing a structure of the hydraulic transmission 10.

As described above, the hydraulic transmission comprises the hydraulic pump 12, the hydraulic motor 14, the high pressure oil line 16 and the low pressure oil line 18. The discharge side of the hydraulic pump 12 is connected to the intake side of the hydraulic motor 14 and the intake side of the hydraulic pump 12 is connected to the discharge side of the hydraulic motor 14.

Fig. 3 illustrates the hydraulic transmission 10 including only one hydraulic motor 14. However, the hydraulic transmission 10 may comprise a plurality of hydraulic motors 14 and the hydraulic motors 14 may be connected to the hydraulic pump 12 via the high pressure oil lines 16 and the low pressure oil lines 18 respectively. In this case, the high pressure oil line 16 having one end thereof connected to the discharge side of the hydraulic pump 12, splits midway and each of the split lines of the high pressure oil line 16 is connected to the intake side of each of the hydraulic motors 14 while a plurality of lines of the low pressure oil line 18 having one end thereof connected to the discharge side of each of the hydraulic motors 14 flow into one and then connected to the discharge side of the hydraulic pump 12.

Accumulators 60 (60A, 60B) are connected to the high pressure oil line 16 via accumulator valves 62 (62A, 62B). The accumulator 60 may be, for instance, a bladder-type in which air and the operating oil are separated by a deformable bag, e.g. a bladder or a piston. In the accumulator 60, the operating oil of high pressure is introduced during an accumulating process so as to deform the bladder or the piston and compress the air. In contrast, during a pressure-releasing process, the compressed air expands or the high pressure air from outside pushes the bladder or piston and then the operating oil is pushed out of the accumulator 60.

Further, at least one set of the accumulator 60 and the accumulator valve 62 is needed. However, if a plurality of sets of the accumulators 60 (60A, 60B) and the accumulator valves 62 (62A, 62B) are arranged as shown in Fig. 3, the plurality of accumulators 60 can be adequately used depending on intended purposes.

Furthermore, at least one of the accumulators 60 may have an air part whose displacement is greater than that of an operating oil part at the time of initially sealing the air, and the pressure of the initially-sealed air of each accumulator 60 may be different from one another. Moreover, it is possible that the operating oil is introduced into the accumulator 60 via the accumulator valve 62 instantaneously and the pressure in the accumulator 60 changes to follow the pressure change in the high pressure oil line 16 without delay in terms of time, and the pressure in the accumulator 60 may be equal to the pressure in the high pressure oil line 16 in such state that the accumulator valve 62 is open.

Between the accumulator valve 62 (62A, 62B) and the accumulator 60 (60A, 60B), provided is a first pressure sensor P1. In the high pressure oil line 16, provided is a second pressure sensor P2. The first pressure sensor P1 measures the pressure of the operating oil in the accumulator 60 (60A, 60B). Meanwhile, the second pressure sensor P2 measure the pressure of the operating oil in the high pressure oil line 16.

Measurement results of the first pressure sensor P1 and the second pressure sensor P2 are sent to the ACC valve controller 38 to be used for controlling the opening and closing of the accumulator valves 62 (62A, 62B). The ACC valve controller 38 controls the opening and closing of the accumulator valves 62 based on the wind speed and determination results of the grid state determination unit 54 in addition to the results of the first pressure sensor P1 and the second pressure sensor P2. Specifically, the ACC valve controller 38 controls the opening and closing of the accumulator valves 62 based on at least one of the wind speed and the state of the grid 50 determined by the grid state determination unit 54 and the pressure in the high pressure oil line 16 measured by the second pressure sensor P2.

Further, separately of the accumulator 60, an anti-pulsation accumulator 64 is provided in the high pressure oil line 16 and the low pressure oil line 18. These suppress the pressure change (pulsation) in the high pressure oil line 16 and the low pressure oil line 18. In the low pressure oil line 18, provided are an oil filter 66 for removing impurities from the operating oil and an oil cooler for cooling the operating oil.

Between the high pressure oil line 16 and the low pressure oil line 18, provided is a bypass line 70 for bypassing the hydraulic motor 14. And, a relief valve 72 is provided in the bypass line 70 to maintain the pressure of the operating oil in the high pressure oil line 16 the same as a prescribed pressure or below. In this manner, when the pressure in the high pressure oil line 16 rises to the prescribed pressure of the relief valve 72, the relief valve 72 automatically opens so as to release the high pressure oil to the low pressure oil line 18 via the bypass line 70.

Furthermore, in the hydraulic transmission 10, provided are an oil tank 80, a supplementary line 82, a boost pump 84, an oil filter 86, a return line 88 and a low pressure relief valve 89.

The oil tank stores supplementary operating oil. The supplementary line connects the oil tank 80 to the low pressure oil line 18. The boost pump 84 is arranged in the supplementary line 82 so as to replenish the low pressure oil line 18 with the supplementary operating oil from the oil tank 80. In such a case, the oil filter 86 arranged in the supplementary line 82 removes impurities from the operating oil to be supplied to the low pressure oil line 18.

Even when the operating oil leaks in the hydraulic transmission 10, the boost pump 84 replenishes the low pressure oil line with the operating oil from the oil tank 80 and thus, the amount of the operating oil circulating in the hydraulic transmission can be maintained.

The return line 88 is installed between the oil tank 80 and the low pressure oil line 18. The low pressure relief valve 89 is arranged in the return line 88 and the pressure in the low pressure oil line 18 is maintained near the prescribed pressure.

By this, even though the boost pump 84 supplies the operating oil to the low pressure oil line 18, once the pressure in the low pressure oil line 18 reaches the prescribed pressure of the low pressure relief valve 89, the low pressure relief valve 89 automatically opens so as to release the operating oil to the oil tank 80 via the return line 88. Thus, the amount of the operating oil circulating in the hydraulic transmission 10 can be adequately maintained.

Further, an accumulator pressure relief line 61 is arranged between the accumulator valve 62 (62A, 62B) and the accumulator 60 (60A, 60B). The accumulator pressure relief line 61 is equipped with a pressure relief valve 63 and connected to the oil tank 80. When the pressure relief valve 63 is opened under the control of the control unit 30, the accumulator 60 becomes in communication with the oil tank 80 and the pressure in the accumulator 60 is released to a side of the oil tank 80.

Fig. 3 illustrates the case in which the accumulator pressure relief line 61 is connected to the oil tank 80. However, the accumulator pressure relief line 60 may be connected to the low pressure oil line 18.

Furthermore, the hydraulic pump 12 and the hydraulic motor 14 are variable displacement type, the displacement of which can be adjusted. Thus, actuating the same requires electric power. Therefore, in the wind turbine generator system 1, the electric power is normally supplied from the grid 50 to the hydraulic pump controller 3212 and the hydraulic motor controller 34. In such a case that a solenoid valve is used to control the displacements of the hydraulic pump 12 and the hydraulic motor 14, the electric power is supplied to the solenoid valve as well. When the voltage of the grid 50 becomes zero, the uninterruptible power supply 52 supplies electric power to the hydraulic pump controller 32 and the hydraulic motor controller 34 and may further be supplied to the solenoid valve for adjusting the displacements of the hydraulic pump 12 and the hydraulic motor 14.

In the hydraulic transmission 10, when the hydraulic pump 12 is driven by the rotation of the main shaft 8, a pressure difference occurs between the high pressure oil line 16 and the low pressure oil line 18. This pressure difference drives the hydraulic motor 14. In such a case, the displacement of the hydraulic pump 12 is adjusted by the pump controller 32 so that a power coefficient becomes at a maximum thereof. Meanwhile, the displacement of the hydraulic motor 14 is adjusted by the motor controller 34 depending on the rotation speed of the main shaft 8 and the displacement of the hydraulic pump 12 so that a rotation speed of the hydraulic motor 14 becomes constant.

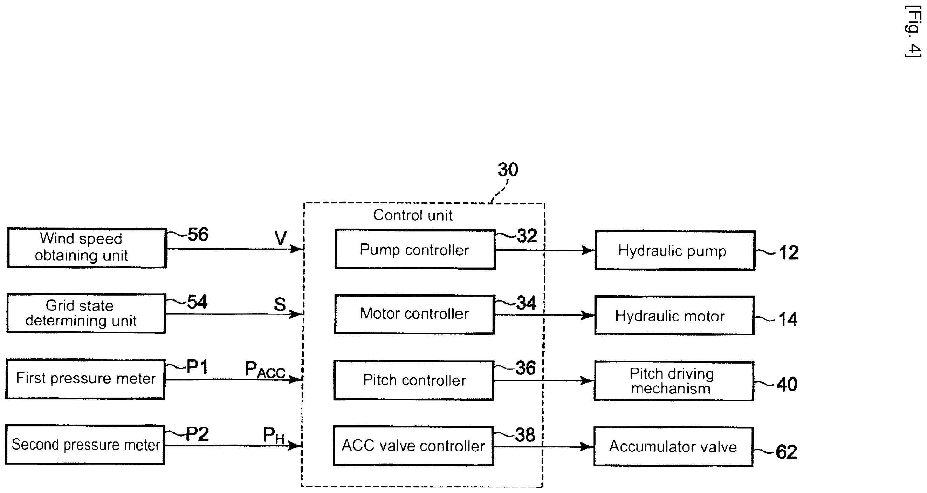

The wind turbine generator system 1 has the above structure and each controller thereof is controlled by the control unit 30. Fig. 4 is a diagram showing a system structure of the wind turbine generator system 1. As shown in the drawing, the following items are sent to the control unit 30, which are the wind speed V obtained in a wind speed obtaining unit 56, a grid state S of the grid 50 determined by the grid state determination unit 54, a pressure P_{ACC} in the accumulator 60 measured by the first pressure sensor P1 and a pressure P_{H} in the high pressure oil line 16 measured by the second pressure sensor P2. And each controller (32, 34, 36, 38) of the control unit 30 controls the hydraulic pump 12, the hydraulic motor 14, the pitch driving mechanism 40 (i.e. servo valve 44) and the accumulator valve 62 based on the wind speed V, the grid state S, the pressure P_{ACC}, the pressure P_{H} and so on.

Moreover, the wind speed obtaining unit 56 is not limited as long as being capable of measuring or estimating the wind speed V. For instance, the wind speed obtaining unit 56 may be a wind speed meter mounted on the nacelle, or a combination of a rotation meter for measuring the rotation speed of the main shaft 8 and a calculator for estimating the wind speed V from measuring results of the rotation meter.

Next, an operation control of the wind turbine generator system 1 by the control unit 30 is explained. Hereinafter, three types of the operation control are explained in the order of a low wind speed control wherein the wind speed V is below a cut-in wind speed, a low voltage control wherein the voltage of the grid 50 decreases and a gust control wherein there arises a gust. Then, the operation method for efficiently operating the three types of the operation control is explained.

### (Low wind speed control)

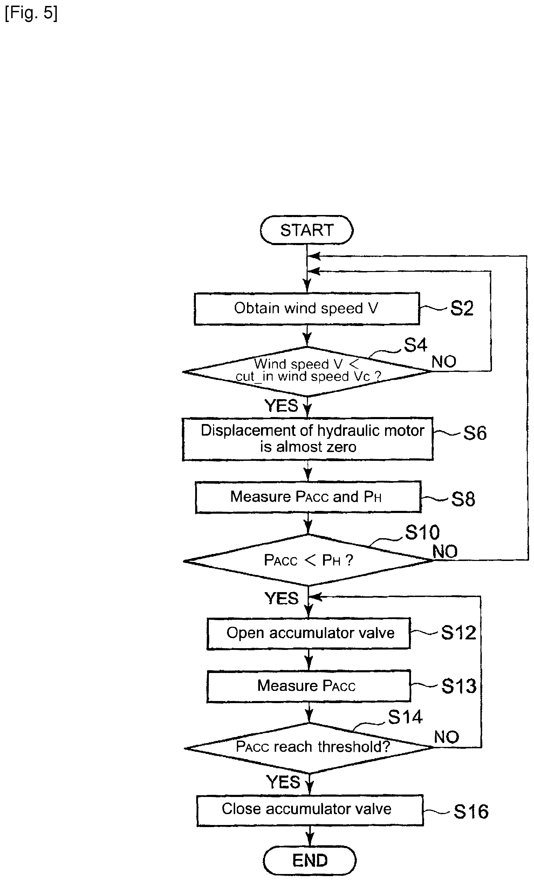

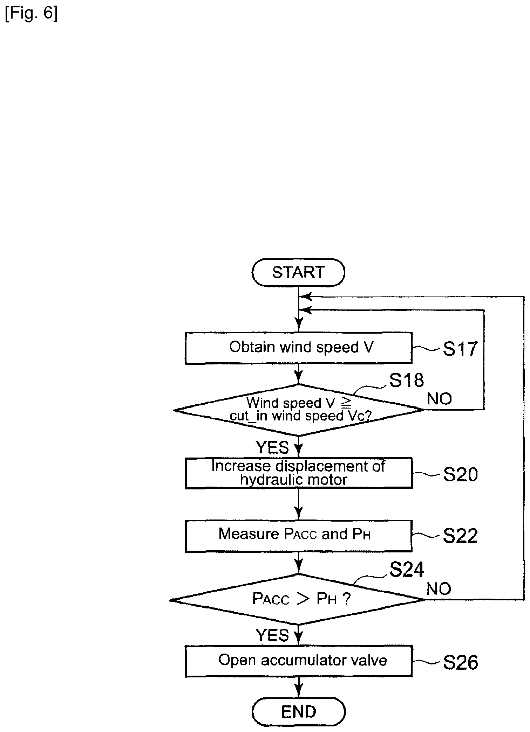

Fig. 5 is a flow chart showing an operation control of the accumulator 60 to accumulate pressure therein at a low wind speed. Fig. 6 is a flow chart showing an operation control of releasing the pressure of the accumulator 60.

Fig. 5 illustrates the following process. First, the wind speed obtaining unit 56 obtains the wind speed V in a step S2, and the wind speed V and the cut-in wind speed Vc are compared in a step S4. Then, in the step S4, if it is determined that the wind speed V is smaller than the cut-in speed Vc, the process advances to a step S6. In the step S6, the motor controller 34 controls the displacement of the hydraulic motor 14 approximately to zero and the power generation by the generator 20 is stopped. In contrast, if it is determined that the wind speed V is not less than the cut-in speed Vc, the process returns to the step S2 to obtain the wind speed V again. The cut-in wind speed Vc is defined as a wind speed to start the power generation by the generator 20.

After the step S6 in which the displacement of the hydraulic motor 14 is controlled approximately to zero, the pressure P_{ACC} in the accumulator 60 is measured by the first pressure sensor P1 and the pressure P_{H} in the high pressure oil line 16 is measured by the second pressure sensor P2 in a step S8. Then, the process advances to a step S10 in which the pressure P_{ACC} in the accumulator 60 and the pressure P_{H} in the high pressure oil line 16 are compared.

In the step S10, if it is determined that the pressure P_{ACC} in the accumulator 60 is lower than the pressure P_{H} in the high pressure oil line 16, the process advances to a step S12 in which the ACC valve controller 38 closes the accumulator valve 62. In contrast, if it is determined in the step S10 that the pressure P_{ACC} in the accumulator 60 is not lower than the pressure P_{H} in the high pressure oil line 16, the process returns to the step S2 so that the wind speed obtaining unit 56 obtains the wind speed V again.

Once the accumulator 62 is opened in the step S12, the pressure P_{ACC} in the accumulator 60 is measured by the first pressure sensor P1 in a step S13. Then, it is determined in a step S14 if the pressure P_{ACC} has reached a threshold value. If it is determined in the step S14 that the pressure P_{ACC} in the accumulator 60 has reached or exceeds the threshold value, the process advances to a step S16 in which the ACC valve controller 38 closes the accumulator valve 62. In contrast, if it is determined in the step S14 that the pressure P_{ACC} in the accumulator 60 is less than the threshold value, the process returns to the step S12 to keep the accumulator valve 62 open.

As the threshold value, with which the pressure P_{ACC} is compared with in the step S14, a small amount, e.g. 5bar, less than the prescribed pressure of the relief valve 72 arranged in the bypass line 70 may be used.

In this manner, the accumulator valve 62 is opened at the low wind speed when the wind speed V is below the cut-in wind speed Vc to charge the accumulator, and then when the wind speed becomes the same as the cut-in wind speed Vc or above again, the pressure in the accumulator 60 is released so as to assist the rotation of the hydraulic motor 14.

As Fig. 6 illustrates, first the wind speed obtaining unit 56 obtains the wind speed V in a step S17, and in a step S18 it is determined if the wind speed V is again the same as or above the cut-in wind speed Vc. If it is determined that the wind speed V is again the same as or above the cut-in wind speed Vc, the displacement of the hydraulic motor 14 is increased by the motor controller 34 and the power generation by the generator 20 starts again. In contrast, if it is determined that the wind speed V remains less than the cut-in wind speed Vc, the process returns to the step S17 to obtain the wind speed V again.

After the step S20 in which the displacement of the hydraulic motor 14 is increased, the pressure sensor P1 and the pressure sensor P2 measure the pressure P_{ACC} in the accumulator 60 and the pressure P_{H} in the high pressure oil line 16 respectively in a step S22, and then the measured pressure P_{ACC} and the measured pressure P_{H} are compared in a step S24. And if it is determined that the pressure P_{ACC} in the accumulator 60 is greater than the pressure P_{H} in the high pressure oil line 16 in the step S24, the process advances to a step S26 in which the ACC valve controller 38 opens the accumulator valve 62. In contrast, if it is determined in the step S24 that the pressure P_{ACC} in the accumulator 60 is not greater than the pressure P_{H} in the high pressure oil line 16, the process returns to the step S17 to obtain the wind speed V again.

In this manner, the accumulator valve 62 is opened when the wind speed V becomes the same as or above the cut-in wind speed Vc. As a result, it is possible to utilize the pressure stored in the accumulator when the wind speed is small and thus, more electric power can be generated and the operation efficiency is improved.

Explained so far is the case wherein, the pressure of the fluid is stored at the low wind speed operation when the wind speed V is below the cut-in wind speed Vc and once the wind speed V becomes again the same as or above the cut-in wind speed Vc, the rotation of the hydraulic motor 14 is assisted with use of pressure of fluid in the accumulator. However, the pressure accumulated in the accumulator at the low wind speed may be used in different situations. For instance, the rotation of the hydraulic motor 14 may be assisted with the use of the accumulator 60 having the pressure reserved in advance at the low wind speed to resume the operation of the wind turbine generator system 1 after the maintenance.

Further, the case was also explained in reference to Fig. 5 and Fig. 6, in which the accumulator 60 reserves the pressure when the wind speed V is less than the cut-in wind speed Vc and once the wind speed V becomes again not less than the cut-in wind speed Vc, the rotation of the hydraulic motor 14 is assisted with the use of the accumulator 60. However, there is a case sometimes wherein the pressure P_{ACC} is already high enough when the wind speed V becomes less than the cut-in wind speed Vc. In such a case, instead of reserving the pressure in the accumulator 60 as shown in Fig. 5, it is also possible to wait for the wind speed V to return to the same as or above the cut-in wind speed Vc and then release the pressure of the accumulator 60 in the process shown in Fig. 6 so as to assist the rotation of the hydraulic motor 14.

Moreover, Fig. 5 illustrates the case wherein, when the pressure P_{ACC} in the accumulator 60 is lower than the pressure P_{H} in the high pressure oil line 16 (YES in the step S10), the accumulator valve 62 opens so as to save the fluid in the accumulator 60. However, it is also possible to control the opening and closing of the accumulator 62 based on the result of comparing the pressure P_{ACC} in the accumulator 60 and a pressure threshold value Pth in the accumulator. The pressure threshold value Pth may be the same value as the prescribed pressure of the operating oil in the high pressure oil line 16, or lower than the prescribed pressure of the operating oil in the high pressure oil line 16.

It is also possible to skip the steps S8 through S10 of Fig. 5 so that, after the displacement of the hydraulic motor 14 is reduced in the step S6 (reduced approximately to zero but leaving some displacement), the accumulator valve 62 is opened to save the fluid in the accumulator 60. If the accumulator valve 62 is already open, the step S12 may be skipped as well the steps S8 through S10.

Further, Fig. 5 illustrates the case in which the accumulator valve 62 opens when the pressure P_{ACC} in the accumulator 60 is lower than the pressure P_{H} in the high pressure oil line 16 (YES in the step S10), but the accumulator valve 62 may be kept open consistently. More specifically, when the wind speed V is below the cut-in wind speed Vc, the control unit may control the displacement of the hydraulic motor 14 approximately to zero, and keeps the accumulator valve 62 open so as to store in the accumulator 60 a pressure of operating oil discharged from the hydraulic pump 12.

Further, Fig. 6 illustrates the case in which the accumulator valve 62 opens when the pressure P_{ACC} in the accumulator 60 is higher than the pressure P_{H} in the high pressure oil line 16 (YES in the step S24), but the accumulator valve 62 may be kept open consistently. More specifically, when the wind speed V is not less than the cut-in wind speed Vc, the control unit may keep the accumulator valve 62 open so as to assist rotation of the hydraulic motor 14 with use of the pressure of the operating oil in the accumulator 60.

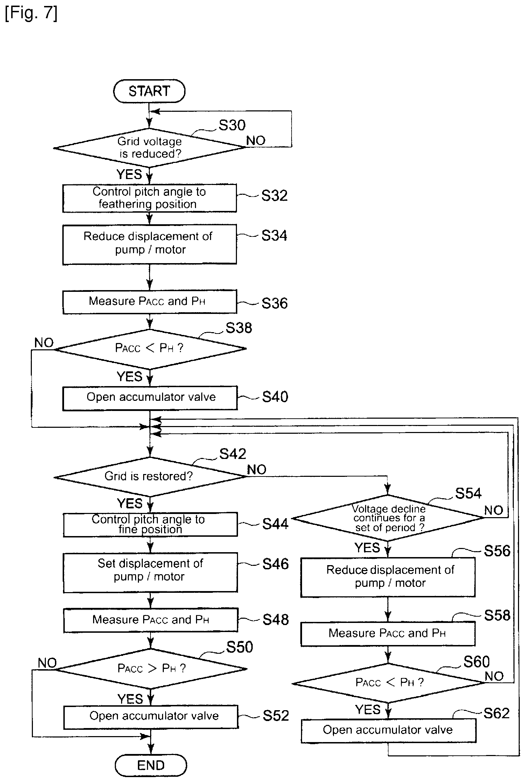

Fig. 7 is a flow chart showing an operation control when a voltage of a grid has decreased. As described in the drawing, it is determined by the grid state determination unit 54 in a step S30 if the voltage of the grid 50 has decreased to the prescribed voltage or lower. If it is determined in the step S30 that the voltage of the grid 50 has decreased to the prescribed voltage or lower, the process advances to a step S32 in which the pitch controller 36 controls the pitch driving mechanism 40, i.e. a servo valve 44 so as to control the supply of the high pressure oil to the hydraulic cylinder 42 and change the pitch angle of the blade 4 to a feathering position. In contrast, if it is determined in the step S30 that the voltage of the grid 50 is greater than the prescribed voltage, which means that the grid 50 is in a normal state, the process returns to the steps S30 to continue monitoring the state of the grid 50 by the grid state determination unit 54.

The prescribed voltage herein refers to a low voltage set defined in the grid code and may include the case wherein the voltage is practically zero temporarily. And the changing of the pitch angle to the feathering position means that the pitch angle of the blade 4 is changed to such a position that the wind acting on the blades 4 provides no net torque to the rotor shaft 8.

After the pitch angle of the blade 4 is changed to the feathering position in the step S32, the process advances to a step S34. In the step 34, the displacements of the hydraulic pump 12 and the hydraulic motor 14 are reduced to an amount required for keeping the generator 20 synchronized with the grid 50.

The displacement herein refers to a geometric volume that a capacitive pump or a capacitive motor pushes per one rotation according to JIS B0142, Japanese Industrial Standard. Specifically, the displacement of the hydraulic pump 12 means the volume of the operating oil being discharged from the hydraulic pump 12 to the high pressure oil line 16 while the main shaft 8 makes one rotation, and the displacement of the hydraulic motor 14 means the volume of the operating oil discharged from the hydraulic motor 14 to the low pressure oil line 18 while the output shaft of the hydraulic motor 14 makes one rotation.

Next in a step S36, the first pressure sensor P1 measures the pressure P_{ACC} in the accumulator 60 and the second pressure sensor P2 measures the pressure P_{H} in the high pressure oil line 16. Then the process advances to a step S38 in which the pressure P_{ACC} in the accumulator 60 and the pressure P_{H} in the high pressure oil line 16 are compared. If it is determined in the step S38 that the pressure P_{ACC} in the accumulator 60 is lower than the pressure P_{H} in the high pressure oil line 16, the process advances to a step S40 to open the accumulator valve 62 by the ACC valve controller 38. In contrast, it is determined in the step S38 that the pressure P_{ACC} in the accumulator 60 is not lower than the pressure P_{H} in the high pressure oil line 16, the process skips the step 40 and advances to a step S42 which is described later.

In this manner, after it is determined in the step S30 that the voltage of the grid 50 has decreased, the accumulator valve is opened in a step S40 in such a case that the pressure P_{ACC} in the accumulator 60 is lower than the pressure P_{H} in the high pressure oil line 16. Thus, the pressure in the high pressure oil line 16 is absorbed in the accumulator 60, thereby preventing the pressure in the high pressure oil line 16 from being too high or the temperature of the operating oil from rising due to the actuation of the relief valve 72.

After the accumulator valve 62 is opened in the step S40, it is determined in a step S42 by the grid state determination unit 54 if the voltage of the grid 50 starts restoring to be greater than the prescribed voltage again. Specifically, in the step 42, it is determined whether the voltage of the grid 50 has started to be restored.

In the similar manner, if it is determined in the step S38 that the pressure P_{ACC} in the accumulator 60 is not lower than the pressure P_{H} in the high pressure oil line 16, it is judged if the voltage of the grid 50 has started to be restored in the step S42.

If it is determined in the step S42 that the grid 50 has started to be restored, a restoration operation to the normal operation mode is performed as described below in the steps S44 to S52.

First, in a step S44, the pitch controller 36 controls the pitch driving mechanism 40 (specifically, the servo valve 44) to adjust the supply of the high pressure oil to the hydraulic cylinder 42 and changes the pitch angle of the blade 4 to the fine position. The changing of the pitch angle to the fine position means that the pitch angle is changed so that the blade 4 receives the wind and applies torque to the rotor 8.

Next in a step S46, the pump controller 32 and the motor controller 34 set the displacements of the hydraulic pump 12 so that the power coefficient becomes at a maximum thereof and increases the displacements of the hydraulic motor 14 so that the power generated by the generator 20 into the grid increases.

In a step S48, the pressure sensor P1 measures the pressure P_{ACC} in the accumulator and the second pressure sensor P2 measures the pressure P_{H} in the high pressure oil line 16. The process advances to a step S50 in which the pressure P_{ACC} in the accumulator 60 and the pressure P_{H} in the high pressure oil line 16 are compared. If it is determined in the step S50 that the pressure P_{ACC} in the accumulator 60 is greater than the pressure P_{H} in the high pressure oil line 16, the process advances to a step S52 to open the accumulator valve 62 by the ACC valve controller 38. In contrast, if it is determined in the step S50 that the pressure P_{ACC} in the accumulator 60 is not greater than the pressure P_{H} in the high pressure oil line 16, a step S52 is not performed.

In this manner, after it is determined in the step S42 that the voltage of the grid 50 is restored, the accumulator valve 62 is opened in a step S52 in such a case that the pressure P_{ACC} in the accumulator 60 is greater than the pressure P_{H} in the high pressure oil line 16, so as to assist the rotation of the hydraulic motor 14 with use of the pressure of the operating oil in the accumulator 60.

Although not shown in Fig. 7, after opening the accumulator valve 62 in the step S52, it is possible to take measure against the recurrence of the voltage decline of the grid 50 by reducing the pressure in the accumulator 60.

For example, the pressure relief valve 63 is opened while the accumulator valve 62 is closed so that the pressure in the accumulator 60 is allowed to escape to the oil tank via the accumulator pressure relief line 61 (if the accumulator pressure relief line 61 is connected to the low pressure oil line 18, the pressure is released to the low pressure oil line 18) to reduce the pressure in the accumulator 60. Alternatively, it is possible to reduce the pressure of the air in the bladder-type or the piston-type accumulator 60 while the accumulator valve 62 is closed so as to reduce the pressure of the operating oil in the accumulator 60.

In contrast, if it is determined in the step S42 that the grid 50 is not restored and the voltage of the grid 50 remains the same as or below the prescribed voltage, the process advances to a step S54. In the step S54, it is determined if a condition in which the voltage of the grid 50 is decreased continues for a set period of time. And if it determined that the condition continues for a set period of time, the process moves to a shutoff mode (steps S56 to S62) as described below. In contrast, if it is determined in the step S54 that the condition does not continue for a set period of time, the process returns to the step S42 in which it is determined again by the grid state determination unit 54 if the gird 50 is restored.

The set period of time here refers to the time defined in the grid code.

The transition to the shutoff mode is performed in the steps S56 to S62. First, in the step S56 the pump controller 32 and the motor controller 34 reduce the displacements of the hydraulic pump 12 and the hydraulic motor 14. (approximately to zero).

Next, in the step S58 the first pressure sensor P1 measures the pressure P_{ACC} in the accumulator 60 and the second pressure sensor P2 measures the pressure P_{H} in the high pressure oil line 16. After the step S58, the process advances to the step S60 in which the pressure P_{ACC} in the accumulator 60 and the pressure P_{H} in the high pressure oil line 16 are compared. If it is determined in the step S60 that the pressure P_{ACC} in the accumulator 60 is lower than the pressure P_{H} in the high pressure oil line 16, the process advances to the step S62 in which the ACC valve controller 38 opens the accumulator valve 62. In contrast, if it is determined in the step S60 that the pressure P_{ACC} in the accumulator 60 is not lower than the pressure P_{H} in the high pressure oil line 16, the process returns to the step S42 and it is determined again if the voltage of the grid 50 return to the prescribed voltage or higher.

In this manner, after it is determined in the step S54 that the condition in which the voltage of the grid 50 is decreased continues for a set period of time, the accumulator valve 62 is opened in the step S62 in such a case that the pressure P_{ACC} in the accumulator 60 is lower than the pressure P_{H} in the high pressure oil line 16. As a result, the pressure in the high pressure oil line 16 is absorbed in the accumulator 60, thereby preventing the pressure in the high pressure oil line 16 from being too high or the temperature of the operating oil from rising due to the actuation of the relief valve 72.

And after opening the accumulator valve 62 in the step S62, the process returns to the step S42 so that the grid state determination unit 54 determines again if the grid 50 is restored. Subsequently, if the grid 50 is restored, the restoration operation to the normal operation mode is performed in the step S44 to S51. If the grid 50 is not restored, the wind turbine generator system 1 stands by in a shutoff state in the steps S56 to S62.

In this manner, when the voltage of the grid is decreased, the pitch angle of the blade 4 is changed to the feathering position and the displacements of the hydraulic pump 12 and the hydraulic motor 14 are reduced to the amount required for keeping the grid 50 synchronized with the generator 20. As a result, the operation of the wind turbine generator system can continue without being disconnected from the grid 50. In other words, it is possible to achieve the Ride Through function at Grid low voltage condition.

Further, when the voltage of the grid 50 is decreased, the accumulator valve 62 is opened in such a case that the pressure P_{ACC} in the accumulator 60 is lower than the pressure P_{H} in the high pressure oil line 16, thereby preventing the pressure in the high pressure oil line 16 from being too high or the temperature of the operating oil from rising due to the actuation of the relief valve 72.

Furthermore, when the condition in which the voltage of the grid 50 is decreased continues for a set period of tie, the displacements of the hydraulic pump 12 and the hydraulic motor 14 are controlled approximately to zero and the operation of the wind turbine generator system 1 is shutoff. However, during this process, if the pressure P _{ACC} in the accumulator 60 is lower than the pressure P_{H} in the high pressure oil line 16, the accumulator valve 62 is opened, thereby preventing the pressure in the high pressure oil line 16 from being too high or the temperature of the operating oil from rising due to the actuation of the relief valve 72.

Moreover, when the grid 50 is restored, the pitch angle of the blade 4 is changed to the fine position and the displacements of the hydraulic pump 12 and the hydraulic motor 14 are set so that the power coefficient becomes at a maximum thereof and a rotation speed of the generator 20 becomes constant. As a result, it is possible to promptly restore the efficient operation thereof. In this process, the accumulator valve 62 is opened in such a case that the pressure P_{ACC} in the accumulator 60 is greater than the pressure P_{H} in the high pressure oil line 16 so as to assist the rotation of the hydraulic motor 14 with use of the pressure of the operating oil in the accumulator 60.

Further, Fig. 7 illustrates the case in which the accumulator valve 62 opens in step S40 when the pressure P_{ACC} in the accumulator 60 is lower than the pressure P_{H} in the high pressure oil line 16 (YES in the step S38), but the accumulator valve 62 may be kept open regardless of which one of the pressure P_{ACC} or the pressure P_{H} is lower. More specifically, when it is determined that the voltage of the grid 50 has decreased to a prescribed voltage or lower and the condition based on Gid Code rule continues, the control unit may controls the pitch driving mechanism 40 to change the pitch angle of the blade 4 toward the feathering position, changes the displacements of the hydraulic pump 12 to meet the load of the rotor 2 and reduces displacements of the hydraulic motor 14 to an amount required for keeping the generator 20 synchronized with the grid 50, and keeps the accumulator valve 62 open so as to store in the accumulator 60 a pressure of the operating oil discharged from the hydraulic pump 12.

### (Gust control)

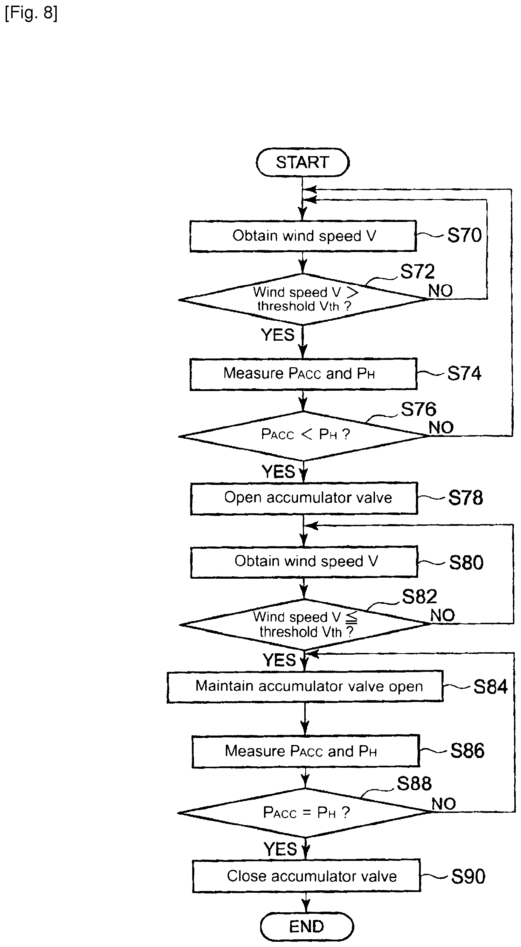

Fig. 8 is a flow chart showing an operation control when there arises a gust. As shown in the drawing, first, the wind speed obtaining unit 56 obtains the wind speed V in a step S70. And in a step S72, it is determined if the wind speed V is greater than the threshold value Vth, i.e. if there is a gust. If it is determined in the step S72 that the wind speed V is greater than the threshold value Vth, the process advances to a step S74 in which the first pressure sensor P1 measures the pressure P_{ACC} in the accumulator 60 and the second pressure sensor P2 measures the pressure P_{H} in the high pressure oil line 16. In contrast, if it is determined in the step S72 that the wind speed V is not greater than the threshold value Vth, the process returns to the step S70 to obtain the wind speed V again.

Herein, the threshold value Vth may be, for example, 60m/sec which is obtained as an average wind speed for a period of three seconds or longer.

After measuring the pressure P_{ACC} in the accumulator 60 and the pressure P_{H} in the pressure oil line 16 in the step S74, the process advances to a step S76 in which the pressure P_{ACC} and the pressure P_{H} are compared. If it is determined in the step S76 that the pressure P_{ACC} in the accumulator 60 is lower than the pressure P_{H} in the high pressure line 16, the process advances to a step S78 to open the accumulator valve 62 by the ACC valve controller 38.

In this manner, when there arises a gust (the wind speed V > the threshold value Vth), the accumulator valve 62 is opened in such a case that the pressure P_{ACC} in the accumulator 60 is lower than the pressure P_{H} in the high pressure line 16 so as to absorb the pressure from the high pressure line in the accumulator 60/

Meanwhile, if it is determined in the step S76 that the pressure P_{ACC} in the accumulator 60 is not lower than the pressure P_{H} in the high pressure line 16, the process returns to the step S70 to obtain the wind speed V again by the wind speed obtaining unit 56.

After opening the accumulator valve 62 in the step S78, the wind speed obtaining unit 56 obtains the wind speed V in a step S80. In a step S82, it is determined if the wind speed V has decreased to the threshold value Vth or below. If it is determined in the step S82 that the wind speed V has decreased to the threshold value Vth or below, the process advances to a step S84 to keep the accumulator valve 62 open. In contrast, if the wind speed V still remains greater than the threshold value Vth, the process returns to the step S80 to obtain the wind speed V again.

After keeping the accumulator valve 62 open in the step S84, the first pressure sensor P1 measures the pressure P_{ACC} in the accumulator 60 and the second pressure sensor P2 measures the pressure P_{H} in the high pressure oil line 16 in a step S86. Then, in a step S88, it is determined if the pressure P_{ACC} in the accumulator 60 becomes the same as the pressure P_{H} in the high pressure oil line 16.

If it is determined in the step S88 that the pressure P_{ACC} in the accumulator 60 becomes the same as the pressure P_{H} in the high pressure oil line 16, the process advances to a step S90 to close the accumulator valve 62 by the ACC valve controller 38. In contrast, if it is determined in the step S88 that the pressure P_{ACC} in the accumulator 60 is not the same as the pressure P_{H} in the high pressure oil line 16, the process returns to the step S84 to keep the accumulator valve 62 open.

In this manner, when there arises a gust (the wind speed V > the threshold value Vth), the accumulator valve 62 is opened in such a case that the pressure P_{ACC} in the accumulator 60 is lower than the pressure P_{H} in the high pressure line 16 so as to absorb the pressure of the high pressure line 16 in the accumulator 60. When the wind speed V of the gust is decreased to the threshold value Vth or below, the accumulator valve 62 is kept open until the pressure P_{ACC} in the accumulator 60 becomes the same as the pressure P_{H} in the high pressure oil line 16 so as to release the pressure in the accumulator 60. In this manner, it is possible to minimize the impact of the gust on the wind turbine generator system 1.

As described above, Fig. 8 illustrates the case wherein once the wind speed V becomes as slow as equal to or lower than the threshold value Vth, the accumulator valve 62 is kept open until the pressure P_{ACC} in the accumulator 60 becomes the same as the pressure P_{H} in the high pressure oil line 16 so as to release the pressure P_{ACC} in the accumulator (S84 through S88). If the operating oil flows instantaneously into the accumulator 60 via the accumulator valve 62 and the pressure P_{ACC} in the accumulator 60 changes following the change of the pressure P_{H} in the high pressure oil line 16 without delay, the steps S84 through S88 may be skipped as well.

Further, Fig. 8 illustrates the case in which the accumulator valve 62 opens when the pressure P_{ACC} in the accumulator 60 is lower than the pressure P_{H} in the high pressure oil line 16 (YES in the step S76), but the accumulator valve 62 may be kept open regardless of which one of the pressure P_{ACC} or the pressure P_{H} is lower. More specifically, when there arises a gust having the wind speed V greater than the prescribed threshold value Vth, the control unit keeps the accumulator valve 62 open so as to store in the accumulator 60 the pressure of the operating oil discharged from the hydraulic pump 12, and when the wind speed V of the gust becomes not greater than the prescribed threshold value Vth, the control unit keeps the accumulator valve 62 open so as to assist rotation of the hydraulic motor 14 with use of the pressure of the operating oil in the accumulator 60.

(Operation control method to efficiently perform three types of the operation control) Next, the operation control method for performing the above three types of the operation control efficiently. According to the operation control method, two accumulators 60A and 60B (ref. Fig. 3) are used for different control purposes and the pressures of the accumulators 60A and 60B are adjusted in advance as a preparation for performing each control efficiently. Explained herein is the example in which the accumulator 60A is used for the control when the wind speed is low, and the accumulator 60B is used for the control when the grid voltage is decreased and when there arises a gust.

The accumulator 60A used for the control when the wind speed is small is referred to as a first accumulator 60A and the accumulator 60B used for the control when the grid voltage is decreased and the control when there is a gust is referred to as a second accumulator 60B. Further, the accumulator valve 62a provided for the accumulator 60A is referred to as a first accumulator valve 62A and the accumulator valve provided for the accumulator 60B is referred to as a second accumulator valve 62B.

First, the pressure sensors P1 and P2 measure the pressure P_{ACC}1 in the first accumulator 60A and the pressure P_{ACC}2 in the second accumulator 60B, and the pressure P_{H} in the high pressure oil line 16.

And, in such a case that the pressure P_{ACC}1 in the first accumulator 60A is lower than the pressure P_{ACC}2 in the second accumulator 60B, the first accumulator valve 62A is opened so as to store the pressure in the first accumulator 60A. The storing of the pressure in the first accumulator 60A is preferably performed at a low wind speed not greater than the cut-in wind speed in which there is no power generation by the generator 20, or in the rated operation to control the output constant by adjusting the pitch angle so as to prevent the impact on the power generation efficiency of the wind turbine generator system 1.

In this manner, the pressure P_{ACC}1 in the first accumulator 60A is always kept comparatively high.

In contrast, in such a case that the pressure P_{ACC}1 in the first accumulator 60A is higher than the pressure P_{ACC}2 in the second accumulator 60B, the second accumulator valve 62B is opened to release the pressure of the second accumulator 60B.

In this manner, the pressure P_{ACC}2 in the second accumulator 60B is always kept comparatively low.

In this manner, by keeping the pressure P_{ACC}1 of the first accumulator 60A comparatively high to be used for the control when the wind speed is low, the rotation of the hydraulic motor 14 can be efficiently assisted with the use of the first accumulator 60A when the wind speed V becomes not less than the cut-in wind speed Vc again after being below the cut-in wind speed Vc.
Further, by always keeping the pressure P_{ACC}2 comparatively low to be used for the control when the grid voltage is decreased and when there arises a gust, the pressure in the high pressure oil line 16 can be efficiently absorbed with the use of the second accumulator 60B when the voltage of the grid 50 is decreased or when the wind speed V exceeds the threshold value Vth.

Above explained is the case wherein the use of the first accumulator 60A and the use of the second accumulator 60B are decided in advance (the first accumulator 60A for the control at the low wind speed, and the second accumulator 60B for the control at the low grid voltage or at the occurrence of the gust). However, the uses of the first accumulator 60A and the second accumulator 60B may be adequately changed depending on a situation.

For instance, the pressure P_{ACC}1 in the first accumulator 60 and the pressure P_{ACC}2 in the second accumulator 60B are regularly measured and the accumulator with higher measured pressure is used for the control when the wind speed is low and the accumulator with lower measured pressure is used for the control when the voltage of the gird is decreased or when there arises a gust.

As described above, in the preferred embodiment, the ACC valve controller 38 of the control unit 30 controls the opening and closing of the accumulator valve 62 based on at least one of the wind speed and the state of the grid 50 determined by the grid state determination unit 54, and the pressure in the accumulator 60 measured by the first pressure sensor P1 and the pressure in the high pressure oil line 16 measured by the second pressure sensor P2.

Therefore, not only the operation efficiency and the safety at the low wind speed and at the occurrence of a gust can be improved but also the Ride Through function at Grid low voltage condition can be achieved.

While the present invention has been described with reference to exemplary embodiments, it is to be understood that the invention is not limited to the disclosed exemplary embodiments and that modifications and variations are possible within the scope of the appended claims.

For instance, in the above preferred embodiment, the example of controlling the opening and closing of the accumulator valve 62 by the ACC valve controller 38 was explained. However, the opening of the accumulator valve 62 may be adjusted in accordance with the pressure difference between the pressure P_{ACC} in the accumulator 60 and the pressure P_{H} in the high pressure oil line 16. For example, when the pressure between the pressure P_{ACC} in the accumulator 60 and the pressure P_{H} in the high pressure oil line 16 is large, the accumulator valve 62 is gradually opened (the opening amount of the accumulator valve 62 is gradually made large) so as to suppress the pressure fluctuation of the high8jun pressure oil line caused by the opening of the accumulator valve 62. Meanwhile, when the pressure between the pressure P_{ACC} in the accumulator 60 and the pressure P_{H} in the high pressure oil line 16 is small, the accumulator valve 62 is promptly opened (the opening amount of the accumulator valve 62 is promptly made large) so as to respond promptly to the change of the situation.

### Reference Signs List

1 wind turbine generator
2 rotor
4 blade
6 hub
8 main shaft
10 hydraulic transmission
12 hydraulic pump
14 hydraulic motor
16 high pressure oil line
18 low pressure oil line
20 generator
22 nacelle
24 tower
26 base
30 control unit
32 pump controller
34 motor controller
36 pitch controller
38 ACC valve controller
40 pitch driving mechanism
42 hydraulic cylinder
44 servo valve
46 oil pressure source
48 accumulator
50 grid system
52 uninterruptible power supply
54 grid status judging unit
60A first accumulator
60B second accumulator
61 Accumulator pressure relief line
62A first accumulator valve
62B second accumulator valve
63 Accumulator pressure relief line
64 anti-pulsation accumulator
66 oil filter
68 oil cooler
70 bypass line
72 relief valve
80 oil tank
82 supplementary line
84 boost pump
86 oil filter
88 return line
89 low pressure relief valve

## Claims

1. A wind turbine generator system comprising:
a hub (6);
a main shaft (8) which is coupled to the hub;
a generator (20) which is synchronized with a grid (50);
a hydraulic pump (12) of variable displacement type which is driven by the main shaft;
a hydraulic motor (14) of variable displacement type which is connected to the generator;
a high pressure oil line (16) which is arranged between a discharge side of the hydraulic pump and an intake side of the hydraulic motor;
a low pressure oil line (18) which is arranged between an intake side of the hydraulic pump and a discharge side of the hydraulic motor;
an accumulator (60) which is connected to the high pressure oil line via an accumulator valve (62); and
a control unit (30) which controls the hydraulic pump, the hydraulic motor and the opening and closing of the accumulator valve;
wherein, the accumulator is connected to the high pressure oil line via the accumulator valve so that when the accumulator valve is opened, the accumulator is in communication with the high pressure oil line, and when the accumulator valve is closed, communication between the accumulator and the high pressure oil line is disconnected and the pressure in the accumulator is independent of the pressure in the high pressure oil line.

2. The wind turbine generator system according to claim 1, further comprising a grid state determination unit (42),
wherein the state of the grid is determined by the grid state determination unit.

3. The wind turbine generator system according to claim 2, further comprising:
a bypass oil line (70) which is arranged between the high pressure oil line and the low pressure oil line to bypass the hydraulic motor; and
a relief valve (72) which is arranged in the bypass oil line to maintain the hydraulic pressure in the high pressure oil line not more than a set pressure.

4. The wind turbine generator system according to claim 2, further comprising:
a first pressure sensor (P1) which detects a pressure in the accumulator; and
a second pressure sensor (P2) which detects a pressure in the high pressure oil line.

5. The wind turbine generator system according to claim 3,
wherein, when the wind speed is not less than the cut-in wind speed, the control unit is configured to keep the accumulator valve open so as to assist rotation of the hydraulic motor with use of pressure of operating oil in the accumulator.

6. The wind turbine generator system according to claim 4,
wherein, when the wind speed is below a cut-in wind speed, the control unit is configured to control a displacement of the hydraulic motor approximately to zero, and open the accumulator valve so as to store in the accumulator a pressure of operating oil discharged from the hydraulic pump, and close the accumulator valve when the pressure in the accumulator detected by the first pressure sensor reaches a threshold value which is decided in advance.

7. The wind turbine generator system according to claim 6,
wherein, when the wind speed is not less than the cut-in wind speed, the control unit is configured to open the accumulator valve so as to assist rotation of the hydraulic motor with use of pressure of operating oil in the accumulator in such a case that the pressure in the accumulator detected by the first pressure sensor is higher than the pressure in the high pressure oil line detected by the second pressure sensor.

8. The wind turbine generator system according to claim 3,
further comprising: a pitch driving mechanism which adjusts a pitch angle of a blade mounted on the hub,
wherein, when the grid state determination unit determines that voltage of the grid starts to be restored, the control unit is configured to change the pitch angle of the blade toward a fine position, and set the displacement of the hydraulic pump so that a power coefficient becomes at a maximum thereof, and increase the displacement of the hydraulic motor so that the power generated by the generator into the grid increases.

9. The wind turbine generator system according to claim 4, further comprising:
a pitch driving mechanism which adjusts a pitch angle of a blade mounted on the hub,
wherein, when the grid state determination unit determines that a voltage of the grid has decreased to a prescribed voltage or lower and the condition based on Gid Code rule continues, the control unit may be configured to control the pitch driving mechanism to change the pitch angle of the blade toward a feathering position, change the displacements of the hydraulic pump to meet the load of the rotor and reduce the displacements of the hydraulic motor to an amount required for keeping the generator synchronized with the grid, and open the accumulator valve so as to store in the accumulator a pressure of the operating oil discharged from the hydraulic pump in such a case that the pressure in the accumulator detected by the first pressure sensor is lower than the pressure in the high pressure oil line detected by the second pressure sensor.

10. The wind turbine generator system according to claim 6,
wherein, when the grid state determination unit determines that voltage of the grid start to be restored, the control unit is configured to change the pitch angle of the blade to a fine position, and set the displacement of the hydraulic pump so that a power coefficient becomes at a maximum thereof, and increase the displacement of the hydraulic motor so that the power generated by the generator into the grid increases.

11. The wind turbine generator system according to claim 9, further comprising:
an uninterruptible power supply which supplies electrical power to the pitch driving mechanism when the voltage of the grid becomes zero.

12. The wind turbine generator system according to claim 9, further comprising:
an uninterruptible power supply which supplies electrical power to the hydraulic pump and the hydraulic motor when the voltage of the grid becomes zero.

13. The wind turbine generator system according to claim 9 or 10, further comprising:
an oil tank (80) which stores operating oil and is connected to the low pressure oil line;
an accumulator pressure relief line (61) provided between the accumulator valve and the accumulator and connected to one of the low pressure oil line or the oil tank; and
a pressure relief valve (63) provided in the accumulator pressure relief line, wherein, when the grid state determination unit determines that voltage of the grid is restored, the control unit is configured to open the pressure relief valve to allow the pressure in the accumulator to escape to the one of the low pressure oil line or the oil tank.

14. The wind turbine generator system according to claim 4,
wherein, when there arises a gust having a wind speed greater than a prescribed threshold value, the control unit is configured to open the accumulator valve so as to store in the accumulator a pressure of operating oil discharged from the hydraulic pump in such a case that the pressure in the accumulator detected by the first pressure sensor is lower than the pressure in the high pressure oil line detected by the second pressure sensor; and
when the wind speed of the gust becomes not greater than the prescribed threshold value, the control unit is configured to keep the accumulator valve open until the pressure in the accumulator detected by the first pressure sensor becomes the same as the pressure in the high pressure oil line detected by the second pressure sensor.

15. The wind turbine generator system according to claim 14,
wherein the prescribed threshold value is 60m/sec which is obtained as an average wind speed for a period of three seconds or longer.

16. The wind turbine generator system according to claim 14, further comprising:
an oil tank which stores operating oil and is connected to the low pressure oil line;
an accumulator pressure relief line provided between the accumulator valve and the accumulator and connected to one of the low pressure oil line and the oil tank; and
a pressure relief valve provided in the accumulator pressure relief line, wherein, when there arises a gust having a wind speed greater than a prescribed threshold value, the control unit is configured to open the pressure relief valve to allow the pressure in the accumulator to escape to one of the low pressure oil line and the oil tank.

17. The wind turbine generator system according to claim 1, further comprising:
a oil tank which stores operating oil; and
a boost pump (84) which replenishes the low pressure oil line with the operating oil from the oil tank.

18. The wind turbine generator system according to claim 17, further comprising:
a return line (88) which returns the operating oil in the low pressure oil line to the oil tank; and
a low pressure relief valve (89) which is arranged in the return line to maintain the hydraulic pressure in the low pressure oil line approximately at a set pressure.

19. An operation control method of a wind turbine generator system which comprises a hub, a main shaft coupled to the hub, a generator which is synchronized with a grid, a hydraulic pump of variable displacement type which is driven by the main shaft, a hydraulic motor of variable displacement type which is connected to the generator, a high pressure oil line which is arranged between a discharge side of the hydraulic pump and an intake side of the hydraulic motor, a low pressure oil line which is arranged between an intake side of the hydraulic pump and a discharge side of the hydraulic motor, and an accumulator which is connected to the high pressure oil line via an accumulator valve, the method comprising:
the step of controlling opening and closing of the accumulator valve, wherein, when the accumulator valve is opened, the accumulator is in communication with the high pressure oil line, and when the accumulator valve is closed, communication between the accumulator and the high pressure oil line is disconnected and the pressure in the accumulator is independent of the pressure in the high pressure oil line.

20. The operation control method of a wind turbine generator system according to claim 19, the operation control method further comprising: the step of when the wind speed is below a cut-in wind speed, controlling a displacement of the hydraulic motor approximately to zero, and keeping the accumulator valve open so as to store in the accumulator a pressure of operating oil discharged from the hydraulic pump.

21. The operation control method of a wind turbine generator system according to claim 19, wherein said wind turbine generator system further comprises a pitch driving mechanism which adjusts a pitch angle of a blade mounted on the hub, the operation control method further comprising: the step of when the grid state determination unit determines that a voltage of the grid has decreased to a prescribed voltage or lower and the condition based on Gid Code rule continues, controlling the pitch driving mechanism to change the pitch angle of the blade toward a feathering position, changing the displacements of the hydraulic pump to meet the load of the rotor and reducing the displacements of the hydraulic motor to an amount required for keeping the generator synchronized with the grid, and keeping the accumulator valve open so as to store in the accumulator a pressure of the operating oil discharged from the hydraulic pump.

22. The operation control method of a wind turbine generator system according to claim 19, the operation control method further comprising: the step of when there arises a gust having a wind speed greater than a prescribed threshold value, keeping the accumulator valve open so as to store in the accumulator a pressure of operating oil discharged from the hydraulic pump, and when the wind speed of the gust becomes not greater than the prescribed threshold value, keeping the accumulator valve open so as to assist rotation of the hydraulic motor with use of pressure of operating oil in the accumulator.

23. The operation control method of a wind turbine generator system according to claim 22,
wherein the prescribed threshold value is 60m/sec which is obtained as an average wind speed for a period of three seconds or longer.

## Patentansprüche

1. Windturbinengeneratorsystem, umfassend:
eine Nabe (6),
eine Hauptwelle (8), die an die Nabe gekoppelt ist;
einen Generator (20), der mit einem Stromnetz (50) synchronisiert ist;
eine hydraulische Pumpe (12) vom variablen Verdrängungstyp, die durch die Hauptwelle angetrieben wird;
einen hydraulischen Motor (14) vom variablen Verdrängungstyp, der mit dem Generator verbunden ist;
eine Hochdruckölleitung (16), die zwischen einer Ausstoßseite der hydraulischen Pumpe und einer Ansaugseite des hydraulischen Motors angeordnet ist; eine Niederdruckölleitung (18), die zwischen einer Ansaugseite der hydraulischen Pumpe und einer Ausstoßseite des hydraulischen Motors angeordnet ist; einen Akkumulator (60), der über ein Akkumulatorventil (62) mit der Hochdruckölleitung verbunden ist; und
eine Steuereinheit (30), die die hydraulische Pumpe, den hydraulischen Motor und das Öffnen und Schließen des Akkumulatorventils steuert;
wobei der Akkumulator über das Akkumulatorventil mit der Hochdruckölleitung verbunden ist, so dass, wenn das Akkumulatorventil geöffnet wird, der Akkumulator in Kommunikation mit der Hochdruckölleitung ist, und wenn das Akkumulatorventil geschlossen ist, die Kommunikation zwischen dem Akkumulator und der Hochdruckölleitung getrennt ist und der Druck in dem Akkumulator unabhängig von dem Druck in der Hochdruckölleitung ist.

2. Windturbinengeneratorsystem nach Anspruch 1, ferner umfassend eine Stromnetzzustand-Bestimmungseinheit (42),
wobei der Zustand des Stromnetzes durch die Stromnetz-Bestimmungseinheit bestimmt wird.

3. Windturbinengeneratorsystem nach Anspruch 2, ferner umfassend:
eine Umgehungsölleitung (70), die zwischen der Hochdruckölleitung und der Niederdruckölleitung angeordnet ist, um den hydraulischen Motor zu umgehen; und
ein Entlastungsventil (72), das in der Umgehungsölleitung angeordnet ist, um den hydraulischen Druck in der Hochdruckölleitung nicht über einem Solldruck zu halten.

4. Windturbinengeneratorsystem nach Anspruch 2, ferner umfassend:
einen ersten Drucksensor (P1), der einen Druck in dem Akkumulator detektiert; und einen zweiten Drucksensor (P2), der einen Druck in der Hochdruckölleitung detektiert.

5. Windturbinengeneratorsystem nach Anspruch 3,
wobei die Steuereinheit, wenn die Windgeschwindigkeit nicht unter einer Einschaltwindgeschwindigkeit liegt, konfiguriert ist, um das Akkumulatorventil offen zu halten, um so die Rotation des hydraulischen Motors durch die Verwendung des Drucks des Betriebsöls in dem Akkumulator zu unterstützen.

6. Windturbinengeneratorsystem nach Anspruch 4, wobei die Steuereinheit, wenn die Windgeschwindigkeit unter einer Einschaltwindgeschwindigkeit liegt, konfiguriert ist, um eine Verdrängung des hydraulischen Motors auf ungefähr Null zu steuern und das Akkumulatorventil zu öffnen, um so in dem Akkumulator einen Druck des von der hydraulischen Pumpe ausgestoßenen Betriebsöls zu speichern, und das Akkumulatorventil zu schließen, wenn der Druck in dem Akkumulator, der durch den ersten Drucksensor detektiert wird, einen Schwellenwert erreicht, über den vorab entschieden wird.

7. Windturbinengeneratorsystem nach Anspruch 6, wobei die Steuereinheit, wenn die Windgeschwindigkeit nicht unter der Einschaltwindgeschwindigkeit liegt, konfiguriert ist, um das Akkumulatorventil zu öffnen, um so die Rotation des hydraulischen Motors durch die Verwendung von Druck des Betriebsöls in dem Akkumulator in einem solchen Fall zu unterstützen, dass der Druck in dem Akkumulator, der durch den ersten Drucksensor detektiert wird, höher als der Druck in der Hochdruckölleitung ist, der durch den zweiten Drucksensor detektiert wird.

8. Windturbinengeneratorsystem nach Anspruch 3, ferner umfassend:
einen Steigungsantriebsmechanismus, der einen Steigungswinkel eines auf der Nabe montierten Flügels anpasst,
wobei die Steuereinheit, wenn die Stromnetzzustand-Bestimmungseinheit bestimmt, dass die Spannung des Stromnetzes beginnt, wieder hergestellt zu werden, konfiguriert ist, um den Steigungswinkel des Flügels in Richtung einer Feinstellung zu verändern und die Verdrängung der hydraulischen Pumpe so festzulegen, dass ein Leistungskoeffizient maximal wird, und die Verdrängung des hydraulischen Motors so zu erhöhen, dass die durch den Generator generierte Leistung in das Stromnetz hinein erhöht wird.

9. Windturbinengeneratorsystem nach Anspruch 4, ferner umfassend:
einen Steigungsantriebsmechanismus, der einen Steigungswinkel eines auf der Nabe montierten Flügels anpasst,
wobei die Steuereinheit, wenn die Stromnetzzustand-Bestimmungseinheit bestimmt, dass eine Spannung des Stromnetzes auf eine vorgeschriebene Spannung oder darunter abgenommen hat und die auf Gid Code-Regel basierende Bedingung weiterhin erfüllt ist, konfiguriert sein kann, um den Steigungsantriebsmechanismus zu steuern, um den Steigungswinkel des Flügels in Richtung einer Fahnenstellung zu ändern, die Verdrängungen der hydraulischen Pumpe zu ändern, um der Last des Rotors zu entsprechen, und die Verdrängungen des hydraulischen Motors auf einen Betrag zu reduzieren, der erforderlich ist, um den Generator mit dem Stromnetz synchronisiert zu halten, und das Akkumulatorventil zu öffnen, um so in dem Akkumulator einen Druck des aus der hydraulischen Pumpe ausgestoßenen Betriebsöls in einem solchen Fall zu speichern, dass der Druck in dem Akkumulator, der durch den ersten Drucksensor detektiert wird, niedriger als der Druck in der Hochdruckölleitung ist, der durch den zweiten Drucksensor detektiert wird.

10. Windturbinengeneratorsystem nach Anspruch 6, wobei die Steuereinheit, wenn die Stromnetzzustand-Bestimmungseinheit bestimmt, dass die Spannung des Stromnetzes beginnt, wieder hergestellt zu werden, konfiguriert ist, um den Steigungswinkel des Flügels zu einer Feinstellung zu verändern und die Verdrängung der hydraulischen Pumpe so festzulegen, dass ein Leistungskoeffizient maximal wird, und die Verdrängung des hydraulischen Motors so zu erhöhen, dass die durch den Generator generierte Leistung in das Stromnetz hinein erhöht wird.

11. Windturbinengeneratorsystem nach Anspruch 9, ferner umfassend: eine unterbrechungsfreie Stromversorgung, die dem Steigungsantriebsmechanismus elektrische Leistung bereitstellt, wenn die Spannung des Stromnetzes Null wird.

12. Windturbinengeneratorsystem nach Anspruch 9, ferner umfassend:
eine unterbrechungsfreie Stromversorgung, welche die hydraulische Pumpe und den hydraulischen Motor mit elektrischer Leistung versorgt, wenn die Spannung des Stromnetzes Null wird.

13. Windturbinengeneratorsystem nach Anspruch 9 oder 10, ferner umfassend:
einen Öltank (80), in dem Betriebsöl verwahrt wird und der mit der Niederdruckölleitung verbunden ist;
eine Akkumulatordruckentlastungsleitung (61), die zwischen dem Akkumulatorventil und dem Akkumulator bereitgestellt wird und mit einer/einem von der Niederdruckölleitung oder dem Öltank verbunden ist; und
ein Druckentlastungsventil (63), das in der Akkumulatordruckentlastungsleitung bereitgestellt wird, wobei die Steuereinheit, wenn die Stromnetzzustand-Bestimmungseinheit bestimmt, dass die Spannung des Stromnetzes wieder hergestellt ist, konfiguriert ist, um das Druckentlastungsventil zu öffnen, um dem Druck in dem Akkumulator das Entweichen in eine(n) von der Niederdruckölleitung oder den Öltank zu ermöglichen.

14. Windturbinengeneratorsystem nach Anspruch 4, wobei die Steuereinheit, wenn eine Bö mit einer Windgeschwindigkeit über einem vorgeschriebenen Schwellenwert kommt, konfiguriert ist, um das Akkumulatorventil zu öffnen, um so in dem Akkumulator einen Druck des aus der hydraulischen Pumpe ausgestoßenen Betriebsöls in einem solchen Fall zu speichern, dass der Druck in dem Akkumulator, der durch den ersten Drucksensor detektiert wird, niedriger als der Druck in der Hochdruckölleitung ist, der durch den zweiten Drucksensor detektiert wird; und
die Steuereinheit, wenn die Windgeschwindigkeit der Bö nicht größer als der vorgeschriebene Schwellenwert wird, konfiguriert ist, um das Akkumulatorventil offen zu halten, bis der Druck in dem Akkumulator, der durch den ersten Drucksensor detektiert wird, der gleiche wie der Druck in der Hochdruckölleitung wird, der durch den zweiten Drucksensor detektiert wird.

15. Windturbinengeneratorsystem nach Anspruch 14, wobei der vorgeschriebene Schwellenwert 60 m/s ist, der als durchschnittliche Windgeschwindigkeit für einen Zeitraum von 3 Sekunden oder länger erhalten wird.

16. Windturbinengeneratorsystem nach Anspruch 14, ferner umfassend:
einen Öltank, in dem Betriebsöl verwahrt wird und der mit der Niederdruckölleitung verbunden ist;
eine Akkumulatordruckentlastungsleitung, die zwischen dem Akkumulatorventil und dem Akkumulator bereitgestellt wird und mit einer/einem von der Niederdruckölleitung und dem Öltank verbunden ist;
und
ein Druckentlastungsventil, das in der Akkumulatordruckentlastungsleitung bereitgestellt wird, wobei die Steuereinheit, wenn eine Bö mit einer Windgeschwindigkeit über einem vorgeschriebenen Schwellenwert kommt, konfiguriert ist, um das Druckentlastungsventil zu öffnen, um dem Druck in dem Akkumulator das Entweichen in eine(n) von der Niederdruckölleitung und dem Öltank zu ermöglichen.

17. Windturbinengeneratorsystem nach Anspruch 1, ferner umfassend:
einen Öltank, in dem Betriebsöl verwahrt wird; und
eine Füllpumpe (84), die die Niederdruckölleitung mit dem Betriebsöl aus dem Öltank wieder auffüllt.

18. Windturbinengeneratorsystem nach Anspruch 17, ferner umfassend:
eine Rücklaufleitung (88), die das Betriebsöl in der Niederdruckölleitung in den Öltank zurückgibt; und
ein Niederdruckentlastungsventil (89), das in der Rücklaufleitung angeordnet ist, um den hydraulischen Druck in der Niederdruckölleitung ungefähr auf einem Solldruck zu halten.

19. Betriebssteuerungsverfahren für ein Windturbinengeneratorsystem, das eine Nabe, eine an die Nabe gekoppelte Hauptwelle, einen Generator, der mit einem Stromnetz synchronisiert ist, eine hydraulische Pumpe vom variablen Verdrängungstyp, die durch die Hauptwelle angetrieben wird, einen hydraulischen Motor vom variablen Verdrängungstyp, der mit dem Generator verbunden ist, eine Hochdruckölleitung, die zwischen einer Ausstoßseite der hydraulischen Pumpe und einer Ansaugseite des hydraulischen Motors angeordnet ist, eine Niederdruckölleitung, die zwischen einer Ansaugseite der hydraulischen Pumpe und einer Ausstoßseite des hydraulischen Motors angeordnet ist, und einen Akkumulator umfasst, der über ein Akkumulatorventil mit der Hochdruckölleitung verbunden ist, wobei das Verfahren umfasst:
den Schritt des Steuerns von Öffnen und Schließen des Akkumulatorventils,
wobei der Akkumulator, wenn das Akkumulatorventil geöffnet ist, in Kommunikation mit der Hochdruckölleitung ist, und wenn das Akkumulatorventil geschlossen ist, die Kommunikation zwischen dem Akkumulator und der Hochdruckölleitung getrennt ist, und wobei der Druck in dem Akkumulator unabhängig von dem Druck in der Hochdruckölleitung ist.

20. Betriebssteuerungsverfahren für ein Windturbinengeneratorsystem nach Anspruch 19, wobei das Betriebssteuerungsverfahren ferner umfasst:
den Schritt des Steuerns einer Verdrängung des hydraulischen Motors auf ungefähr Null und des Offenhaltens des Akkumulatorventils, um so in dem Akkumulator einen Druck des aus der hydraulischen Pumpe ausgestoßenen Betriebsöls zu speichern, wenn die Windgeschwindigkeit unter einer Einschaltwindgeschwindigkeit liegt.

21. Betriebssteuerungsverfahren für ein Windturbinengeneratorsystem nach Anspruch 19, wobei das Windturbinengeneratorsystem ferner einen Steigungsantriebsmechanismus umfasst, der einen Steigungswinkel eines an der Nabe montierten Flügels anpasst, wobei das Betriebssteuerungsverfahren ferner umfasst: wenn die Stromnetzzustand-Bestimmungseinheit bestimmt, dass eine Spannung des Stromnetzes auf eine vorgeschriebene Spannung oder darunter abgenommen hat und die auf der Gid Code-Regel basierende Bedingung weiterhin erfüllt ist, den Schritt des Steuerns des Steigungsantriebsmechanismus, um den Steigungswinkel des Flügels in Richtung einer Fahnenstellung zu ändern, des Änderns der Verdrängungen der hydraulischen Pumpe, um der Last des Rotors zu entsprechen, und des Reduzierens der Verdrängungen des hydraulischen Motors auf einen Betrag, der erforderlich ist, um den Generator mit dem Stromnetz synchronisiert zu halten, und des Offenhaltens des Akkumulatorventils, um so in dem Akkumulator einen Druck des von der Hydraulikpumpe ausgestoßenen Betriebsöls zu speichern.

22. Betriebssteuerungsverfahren für ein Windturbinengeneratorsystem nach Anspruch 19, wobei das Betriebssteuerungsverfahren ferner umfasst:
den Schritt des Offenhaltens des Akkumulatorventils, um so in dem Akkumulator einen Druck des aus der hydraulischen Pumpe ausgestoßenen Betriebsöls zu speichern, wenn eine Bö mit einer Windgeschwindigkeit über einem vorgeschriebenen Schwellenwert kommt, und des Offenhaltens des Akkumulatorventils, um so die Rotation des hydraulischen Motors durch Verwendung des Drucks des Betriebsöls in dem Akkumulator zu unterstützen, wenn die Windgeschwindigkeit der Bö nicht größer als der vorgeschriebene Schwellenwert wird.

23. Betriebssteuerungsverfahren für ein Windturbinengeneratorsystem nach Anspruch 22,
wobei der vorgeschriebene Schwellenwert 60 m/s ist, der als durchschnittliche Windgeschwindigkeit für einen Zeitraum von 3 Sekunden oder länger erhalten wird.

## Revendications

1. Système de générateur éolien comprenant :
un moyeu (6) ;
un arbre principal (8) qui est accouplé au moyeu ;
une génératrice (20) qui est synchronisée avec un réseau (50) ;
une pompe hydraulique (12) du type à cylindrée variable qui est entraînée par l'arbre principal ;
un moteur hydraulique (14) du type à cylindrée variable qui est raccordé à la génératrice ;
une conduite d'huile haute pression (16) qui est disposée entre un côté de refoulement de la pompe hydraulique et un côté d'admission du moteur hydraulique ;
une conduite d'huile basse pression (18) qui est disposée entre un côté d'admission de la pompe hydraulique et un côté de refoulement du moteur hydraulique ;
un accumulateur (60) qui est raccordé à la conduite d'huile haute pression par le biais d'une soupape d'accumulateur (62) ; et
une unité de commande (30) qui commande la pompe hydraulique, le moteur hydraulique et l'ouverture et le fermeture de la soupape d'accumulateur ;
dans lequel l'accumulateur est raccordé à la conduite d'huile haute pression par le biais de la soupape d'accumulateur de telle sorte que, lorsque la soupape d'accumulateur est ouverte, l'accumulateur soit en communication avec la conduite d'huile haute pression et, lorsque la soupape d'accumulateur est fermée, la communication entre l'accumulateur et la conduite d'huile haute pression soit interrompue et la pression dans l'accumulateur soit indépendante de la pression dans la conduite d'huile haute pression.

2. Système de générateur éolien selon la revendication 1, comprenant en outre une unité de détermination d'état de réseau (42),
dans lequel l'état du réseau est déterminé par l'unité de détermination d'état de réseau.

3. Système de générateur éolien selon la revendication 2, comprenant en outre :
une conduite d'huile de contournement (70) qui est disposée entre la conduite d'huile haute pression et la conduite d'huile basse pression afin de contourner le moteur hydraulique ; et
une soupape de détente (72) qui est disposée dans la conduite d'huile de contournement afin de maintenir la pression hydraulique dans la conduite d'huile haute pression à une valeur non supérieure à une pression définie.

4. Système de générateur éolien selon la revendication 2, comprenant en outre :
un premier capteur de pression (P1) qui détecte une pression dans l'accumulateur ; et
un second capteur de pression (P2) qui détecte une pression dans la conduite d'huile haute pression.

5. Système de générateur éolien selon la revendication 3,
dans lequel, lorsque la vitesse du vent n'est pas inférieure à la vitesse de fourniture, l'unité de commande est configurée pour maintenir la soupape d'accumulateur ouverte de façon à apporter une assistance pour la rotation du moteur hydraulique à l'aide de la pression de l'huile de travail dans l'accumulateur.

6. Système de générateur éolien selon la revendication 4,
dans lequel, lorsque la vitesse du vent est inférieure à une vitesse de fourniture, l'unité de commande est configurée pour régler une cylindrée du moteur hydraulique approximativement à zéro, et ouvrir la soupape d'accumulateur de façon à stocker dans l'accumulateur une pression de l'huile de travail refoulée par la pompe hydraulique, et fermer la soupape d'accumulateur lorsque la pression dans l'accumulateur détectée par le premier capteur de pression atteint une valeur seuil qui est fixée à l'avance.

7. Système de générateur éolien selon la revendication 6,
dans lequel, lorsque la vitesse du vent n'est pas inférieure à la vitesse de fourniture, l'unité de commande est configurée pour ouvrir la soupape d'accumulateur de façon à apporter une assistance pour la rotation du moteur hydraulique à l'aide de la pression de l'huile de travail dans l'accumulateur dans un cas dans lequel la pression dans l'accumulateur détectée par le premier capteur de pression est supérieure à la pression dans la conduite d'huile haute pression détectée par le second capteur de pression.

8. Système de générateur éolien selon la revendication 3,
comprenant en outre : un mécanisme de commande de calage qui ajuste un angle de calage d'une pale fixée sur le moyeu,
dans lequel, lorsque l'unité de détermination d'état de réseau détermine que la tension du réseau commence à être rétablie, l'unité de commande est configurée pour changer l'angle de calage de la pale en direction d'une position de petit pas, et régler la cylindrée de la pompe hydraulique de telle sorte qu'un coefficient de puissance prenne sa valeur maximale, et augmenter la cylindrée du moteur hydraulique de telle sorte que la puissance fournie au réseau par le générateur augmente.

9. Système de générateur éolien selon la revendication 4, comprenant en outre :
un mécanisme de commande de calage qui ajuste un angle de calage d'une pale fixée sur le moyeu,
dans lequel, lorsque l'unité de détermination d'état de réseau détermine qu'une tension du réseau a diminué jusqu'à une valeur égale ou inférieure à une tension prescrite et que ces conditions, sur la base du règlement du Code de réseau, continuent, l'unité de commande peut être configurée pour commander le mécanisme de commande de calage afin de changer l'angle de calage de la pale en direction d'une position en drapeau, changer les cylindrées de la pompe hydraulique de façon à répondre à la charge du rotor et réduire les cylindrées du moteur hydraulique à une valeur requise pour maintenir la génératrice synchronisée avec le réseau, et ouvrir la soupape d'accumulateur de façon à stocker dans l'accumulateur une pression de l'huile de travail refoulée par la pompe hydraulique dans un cas dans lequel la pression dans l'accumulateur détectée par le premier capteur de pression est inférieure à la pression dans la conduite d'huile haute pression détectée par le second capteur de pression.

10. Système de générateur éolien selon la revendication 6,
dans lequel, lorsque l'unité de détermination d'état de réseau détermine que la tension du réseau commence à être rétablie, l'unité de commande est configurée pour changer l'angle de calage de la pale en direction d'une position de petit pas, et régler la cylindrée de la pompe hydraulique de telle sorte qu'un coefficient de puissance prenne sa valeur maximale, et augmenter la cylindrée du moteur hydraulique de telle sorte que la puissance fournie au réseau par le générateur augmente.

11. Système de générateur éolien selon la revendication 9, comprenant en outre :
une alimentation en énergie ininterruptible qui alimente le mécanisme de commande de calage en énergie électrique lorsque la tension du réseau prend une valeur nulle.

12. Système de générateur éolien selon la revendication 9, comprenant en outre :
une alimentation en énergie ininterruptible qui alimente la pompe hydraulique et le moteur hydraulique en énergie électrique lorsque la tension du réseau prend une valeur nulle.

13. Système de générateur éolien selon la revendication 9 ou 10, comprenant en outre :
un réservoir d'huile (80) qui stocke de l'huile de travail et est raccordé à la conduite d'huile basse pression ;
une conduite de détente d'accumulateur (61) placée entre la soupape d'accumulateur et l'accumulateur et raccordée à l'un de la conduite d'huile basse pression et du réservoir d'huile ; et
une soupape de détente (63) placée dans la conduite de détente d'accumulateur,
dans lequel, lorsque l'unité de détermination d'état de réseau détermine que la tension du réseau est rétablie, l'unité de commande est configurée pour ouvrir la soupape de détente afin de permettre à la pression dans l'accumulateur de s'échapper vers ledit un de la conduite d'huile basse pression et du réservoir d'huile.

14. Système de générateur éolien selon la revendication 4,
dans lequel, lorsqu'il se produit une rafale présentant une vitesse du vent supérieure à une valeur seuil prescrite, l'unité de commande est configurée pour ouvrir la soupape d'accumulateur de façon à stocker dans l'accumulateur une pression de l'huile de travail refoulée par la pompe hydraulique dans un cas dans lequel la pression dans l'accumulateur détectée par le premier capteur de pression est inférieure à la pression dans la conduite d'huile haute pression détectée par le second capteur de pression ; et lorsque la vitesse du vent de la rafale prend une valeur non supérieure à la valeur seuil prescrite, l'unité de commande est configurée pour maintenir la soupape d'accumulateur ouverte jusqu'à ce que la pression dans l'accumulateur détectée par le premier capteur de pression devienne égale à la pression dans la conduite d'huile haute pression détectée par le second capteur de pression.

15. Système de générateur éolien selon la revendication 14,
dans lequel la valeur seuil prescrite est de 60 m/s et est obtenue en faisant une moyenne de la vitesse du vent pour une période d'au moins trois secondes.

16. Système de générateur éolien selon la revendication 14, comprenant en outre :
un réservoir d'huile qui stocke de l'huile de travail et est raccordé à la conduite d'huile basse pression ;
une conduite de détente d'accumulateur placée entre la soupape d'accumulateur et l'accumulateur et raccordée à l'un de la conduite d'huile basse pression et du réservoir d'huile ; et
une soupape de détente placée dans la conduite de détente d'accumulateur,
dans lequel, lorsqu'il se produit une rafale présentant une vitesse du vent supérieure à une valeur seuil prescrite, l'unité de commande est configurée pour ouvrir la soupape de détente afin de permettre à la pression dans l'accumulateur de s'échapper vers l'un de la conduite d'huile basse pression et du réservoir d'huile.

17. Système de générateur éolien selon la revendication 1, comprenant en outre :
un réservoir d'huile qui stocke de l'huile de travail ; et
une pompe d'appoint (84) qui réapprovisionne la conduite d'huile basse pression avec l'huile de travail provenant du réservoir d'huile.

18. Système de générateur éolien selon la revendication 17, comprenant en outre :
une conduite de retour (88) qui ramène l'huile de travail dans la conduite d'huile basse pression au réservoir d'huile ; et
une soupape de détente basse pression (89) qui est disposée dans la conduite de retour afin de maintenir la pression hydraulique dans la conduite d'huile basse pression approximativement à une pression définie.

19. Procédé de commande du fonctionnement d'un système de générateur éolien qui comprend un moyeu, un arbre principal accouplé au moyeu, une génératrice qui est synchronisée avec un réseau, une pompe hydraulique du type à cylindrée variable qui est entraînée par l'arbre principal, un moteur hydraulique du type à cylindrée variable qui est raccordé à la génératrice, une conduite d'huile haute pression qui est disposée entre un côté de refoulement de la pompe hydraulique et un côté d'admission du moteur hydraulique, une conduite d'huile basse pression qui est disposée entre un côté d'admission de la pompe hydraulique et un côté de refoulement du moteur hydraulique, et un accumulateur qui est raccordé à la conduite d'huile haute pression par le biais d'une soupape d'accumulateur, le procédé comprenant :
l'étape consistant à commander l'ouverture et la fermeture de la soupape d'accumulateur,
dans lequel, lorsque la soupape d'accumulateur est ouverte, l'accumulateur est en communication avec la conduite d'huile haute pression et, lorsque la soupape d'accumulateur est fermée, la communication entre l'accumulateur et la conduite d'huile haute pression est interrompue et la pression dans l'accumulateur est indépendante de la pression dans la conduite d'huile haute pression.

20. Procédé de commande du fonctionnement d'un système de générateur éolien selon la revendication 19, le procédé de commande du fonctionnement comprenant en outre : l'étape consistant à, lorsque la vitesse du vent est inférieure à une vitesse de fourniture, régler une cylindrée du moteur hydraulique approximativement à zéro, et maintenir la soupape d'accumulateur ouverte de façon à stocker dans l'accumulateur une pression de l'huile de travail refoulée par la pompe hydraulique.

21. Procédé de commande du fonctionnement d'un système de générateur éolien selon la revendication 19, dans lequel le système de générateur éolien comprend en outre un mécanisme de commande de calage qui ajuste un angle de calage d'une pale fixée sur le moyeu, le procédé de commande du fonctionnement comprenant en outre : l'étape consistant à, lorsque l'unité de détermination d'état de réseau détermine qu'une tension du réseau a diminué jusqu'à une valeur égale ou inférieure à une tension prescrite et que ces conditions, sur la base du règlement du Code de réseau, continuent, commander le mécanisme de commande de calage afin de changer l'angle de calage de la pale en direction d'une position en drapeau, changer les cylindrées de la pompe hydraulique de façon à répondre à la charge du rotor et réduire les cylindrées du moteur hydraulique à une valeur requise pour maintenir la génératrice synchronisée avec le réseau, et maintenir la soupape d'accumulateur ouverte de façon à stocker dans l'accumulateur une pression de l'huile de travail refoulée par la pompe hydraulique.

22. Procédé de commande du fonctionnement d'un système de générateur éolien selon la revendication 19, le procédé de commande du fonctionnement comprenant en outre : l'étape consistant à, lorsqu'il se produit une rafale présentant une vitesse du vent supérieure à une valeur seuil prescrite, maintenir la soupape d'accumulateur ouverte de façon à stocker dans l'accumulateur une pression de l'huile de travail refoulée par la pompe hydraulique et, lorsque la vitesse du vent de la rafale prend une valeur non supérieure à la valeur seuil prescrite, maintenir la soupape d'accumulateur ouverte de façon à apporter une assistance pour la rotation du moteur hydraulique à l'aide de la pression de l'huile de travail dans l'accumulateur.

23. Procédé de commande du fonctionnement d'un système de générateur éolien selon la revendication 22, dans lequel la valeur seuil prescrite est de 60 m/s et est obtenue en faisant une moyenne de la vitesse du vent pour une période d'au moins trois secondes.
